# EUROPÄISCHE PATENTSCHRIFT

(11) **EP 2 880 810 B1**
(45) Veröffentlichungstag und Bekanntmachung des Hinweises auf die Patenterteilung: **16.05.2018**
(21) Anmeldenummer: 13732492.7
(22) Anmeldetag: 27.06.2013
(51) Int. Cl.: H04L 9/08, H04L 9/32

(54) **AUTHENTIFIZIERUNG EINES DOKUMENTS GEGENÜBER EINEM LESEGERÄT**
AUTHENTICATION OF A DOCUMENT TO A READING DEVICE
AUTHENTICATION D'UN DOCUMENT À UN DISPOSITIF DE LECTURE

(30) Priorität: 31.07.2012 DE 102012213449
(43) Veröffentlichungstag der Anmeldung: 10.06.2015
(73) Patentinhaber: Bundesdruckerei GmbH, 10969 Berlin (DE)
(72) Erfinder: SCHOLZE, Steffen, 13469 Berlin (DE)
(74) Vertreter: Richardt Patentanwälte PartG mbB
(86) Internationale Anmeldenummer: PCT/EP2013/063563
(87) Internationale Veröffentlichungsnummer: WO 2014/019776

(56) Entgegenhaltungen:
- EP-A1- 1 513 286
- Anonymous: "BSI TR-03110 Advanced Security Mechanisms for Machine Readable Travel Documents", , 20. März 2012 (2012-03-20), XP055029789, Gefunden im Internet: URL:https://www.bsi.bund.de/ContentBSI/Pub likationen/TechnischeRichtlinien/tr03110/i ndex_htm.html [gefunden am 2012-06-13]
- STEINER M ET AL: "REFINEMENT AND EXTENSION OF ENCRYPTED KEY EXCHANGE", OPERATING SYSTEMS REVIEW, ACM, NEW YORK, NY, US, Bd. 29, Nr. 3, 1. Juli 1995 (1995-07-01), Seiten 22-30, XP000529095, ISSN: 0163-5980, DOI: 10.1145/206826.206834
- KUEGLER Y SHEFFER PORTICOR D: "Password Authenticated Connection Establishment with the Internet Key Exchange Protocol version 2 (IKEv2); rfc6631.txt", PASSWORD AUTHENTICATED CONNECTION ESTABLISHMENT WITH THE INTERNET KEY EXCHANGE PROTOCOL VERSION 2 (IKEV2); RFC6631.TXT, INTERNET ENGINEERING TASK FORCE, IETF; STANDARD, INTERNET SOCIETY (ISOC) 4, RUE DES FALAISES CH- 1205 GENEVA, SWITZERLAND, 18. Juni 2012 (2012-06-18), Seiten 1-26, XP015081561, [gefunden am 2012-06-18]
- BELLOVIN S M ET AL: "Encrypted key exchange: password-based protocols secure against dictionary attacks", PROCEEDINGS OF THE COMPUTER SOCIETY SYMPOSIUM ON RESEARCH IN SECURITY AND PRIVACY. OAKLAND, MAY 4 - 6, 1992; [PROCEEDINGS OF THE COMPUTER SOCIETY SYMPOSIUM ON RESEARCH IN SECURITY AND PRIVACY], LOS ALAMITOS, IEEE COMP. SOC. PRESS, US, Bd. SYMP. 13, 4. Mai 1992 (1992-05-04), Seiten 72-84, XP010029001, DOI: 10.1109/RISP.1992.213269 ISBN: 978-0-8186-2825-2
- STEVEN M BELLOVIN ET AL: "Augmented encrypted key exchange: a password-based protocol secure against dictionary attacks and password file compromise", PROCEEDINGS OF THE 1ST ACM CONFERENCE ON COMPUTER AND COMMUNICATIONS SECURITY, ACM PRESS, NY, NY, US, Bd. 1, 3. November 1993 (1993-11-03), Seiten 244-250, XP002541159, ISBN: 978-0-89791-629-5

## Beschreibung

Die Erfindung betrifft ein Verfahren zur Authentisierung eines Dokuments gegenüber einem Lesegerät sowie ein entsprechendes Dokument, Lesegerät und Computerprogrammprodukt.

Im Stand der Technik sind eine Reihe von "Password Authenticated Key Exchange (PAKE) Protokolle" bekannt, z.B. das "Encrypted Key Exchange (EKE), das "Simple Password Exponential Key Exchange" (SPEKE) oder das "Password Authenticated Connection Establishment"-Protokoll (PACE), das unter anderem bei der Prüfung der neuen Personalausweise in Deutschland verwendet wird. Die meisten dieser Protokolle, z.B. das PACE-Protokoll, wurden jedoch nicht auf hohe Ausführungsgeschwindigkeit hin spezifiziert oder optimiert, es ist deshalb für zeitkritische Anwendung zum Beispiel bei der Nutzung von kontaktlosen Chipkarten nur eingeschränkt verwendbar. Alternative Algorithmen wie beispielsweise MIFARE oder Legic, die für zeitkritische Anwendungen oftmals besser geeignet sind, weisen einen für viele Anwendungen zu geringeren Sicherheitsgrad auf.

Die technische Richtlinie_TR-03110 offenbart in Kapitel 3.4 ein Verfahren zur Chipkartenauthentifizierung, welches eine Übertragung eines statischen, öffentlichen Diffie-Hellman Schlüssels von der Chipkarte an das Terminal vorsieht.

In EP1513286 A1 wird ein SAC-("server aided computation") basiertes Datenaustauschverfahren zwischen zwei IPv6-fähgen Geräten beschrieben, welches eine zweifache Ausführung eines Diffie-Hellmann-Verfahrens umfasst.

Demgegenüber liegt der Erfindung die Aufgabe zugrunde, ein verbessertes Verfahren zur Authentisierung eines Dokuments gegenüber einem Lesegerät, sowie ein entsprechendes Lesegerät bzw. Dokument, zu schaffen.

Diese Aufgabe wird jeweils mit den Merkmalen der unabhängigen Patentansprüche gelöst. Ausführungsformen der Erfindung sind in den abhängigen Patentansprüchen angegeben. Sofern nicht ausdrücklich gegenteiliges zum Ausdruck gebracht wird, können Ausführungsformen der Erfindung frei miteinander kombiniert werden.

Als **"Dokument"** wird im Folgenden jeglicher Datenträger bezeichnet, welcher einen Mikrochip und eine mit diesem verbundene Antenne aufweist und mit einem geeigneten Lesegerät Daten austauschen kann. Bei dem Dokument kann es sich um ein Wert- oder Sicherheitsdokument, wie zum Beispiel um ein ID-Dokument, handeln. Ein ID-Dokument kann z.B. ein Ausweisdokument, wie zum Beispiel einen Personalausweis, Reisepass, Führerschein, Fahrzeugbrief, Fahrzeugschein oder Firmenausweis, sein. Bei dem Wertdokument kann es sich z.B. um ein Zahlungsmittel, wie zum Beispiel eine Banknote oder eine Kreditkarte handeln. Das Dokument kann auch ein sonstiger Berechtigungsausweis, zum Beispiel eine Eintrittskarte, ein Fahrschein, insbesondere ein Electronic-Ticket, einen Frachtbrief, ein Visum oder dergleichen, sein. Der Dokumentkörper des Dokuments kann buchartig ausgebildet sein, wie dies zum Beispiel bei einem Reisepass der Fall sein kann. Unter einem Dokument wird auch ein sogenanntes Funketikett verstanden, welches auch als RFID-Tag oder RFID-Label bezeichnet wird. Das Dokument beinhaltet vorzugsweise eine Schnittstelle zum kontaktlosen Datenaustausch mit dem Lesegerät. Je nach Ausführungsform kann das Dokument zum Beispiel kunststoff- und/oder papier-basiert sein.

Unter einem **"Lesegerät"** wird im Folgenden ein Datenverarbeitungsgerät verstanden, welches mit dem Dokument Daten austauschen kann um das Dokument zu
authentifizieren bzw. in anderen Worten, um dem Dokument zu ermöglichen, sich bei dem Lesegerät zu authentisieren. Nach Ausführungsformen kann das "Lesegerät" eine kryptografische Funktion zur Signierung und/oder Authentifizierung, eine Bezahlfunktion oder eine andere Funktion zur Durchführung einer Finanztransaktion, eine Ausweisfunktion, insbesondere mit Bildwiedergabe auf einer Anzeigevorrichtung, aufweisen. Insbesondere kann das Lesegerät Funktionalitäten implementieren, wie sie an sich für Lesegeräte maschinenlesbarer Reisedokumente (MRTD) bekannt sind, insbesondere kryptografische Protokolle, wie zum Beispiel ein Basic Access Control (BAC) und/oder ein Extended Access Control (EAC). Nach manchen Ausführungsformen kann das Lesegerät dazu ausgebildet sein, Daten von dem Dokument zu lesen. In manchen Anwendungsszenarien ist es notwendig, sicherzustellen, dass ausschließlich ein berechtigtes Lesegerät auf die in dem Dokument gespeicherten Daten zugreifen kann, so dass sich das Lesegerät vor dem Auslesen dieser Daten gegenüber dem Dokument authentisieren muss. Vorzugsweise beinhaltet die Authentifizierung den Nachweis, dass der Eigentümer des Dokumentes das Dokument dem Lesegerät willentlich zum Auslesen der Daten verfügbar gemacht hat. Dies kann zum Beispiel dadurch geschehen, dass das Lesegerät Daten, die auf der Oberfläche des Dokuments sichtbar und vom Lesegerät optisch erfasst wurden, an das Dokument übermittelt werden als Nachweis, dass der Nutzer das Dokument (und die darauf befindlichen optisch erfassbaren Daten) dem Lesegerät willentlich gezeigt hat. Alternativ kann auch ein vom Nutzer in das Lesegerät eingegebenes Geheimnis zur Authentifizierung des Lesegerätes gegenüber dem Dokument verwendet werden.

Unter einem **"Passwort"** wird im Folgenden eine Folge aus alphanumerische Zeichen und/oder Sonderzeichen verstanden. Das Passwort ist dem Nutzer des Dokuments oder dem Dokument selbst eindeutig zugeordnet. Das Passwort kann insbesondere als PIN ausgebildet sein, welche nur dem Nutzer des Dokuments bekannt ist. Eine PIN besteht vorzugsweise aus wenigen (z.B. vier) Stellen und besteht aus alphanumerischen Zeichen. Je nach Sicherheitsanforderung sind jedoch auch PINs mit mehr Stellen und bestehend aus Ziffern oder einer Mischung von alphanumerischen- und Sonderzeichen möglich. Nach manchen Ausführungsformen der Erfindung ist das Passwort in dem Dokument gespeichert. Das Passwort kann zusätzlich auch in Form einer maschinenlesbaren Zone (MRZ) auf dem Dokument in optisch erfassbarer Weise (z.B. Aufdruck, Prägung, etc.) angebracht sein. Das Password kann zusätzlich zu der Speicherung auch in Form einer "Card Access Number" (CAN), also einer auf dem Dokument aufgedruckten Nummer, auf dem Dokument in optisch erfassbarer Weise aufgedruckt sein.

Das **Diffie-Hellman (DH) Protokoll** ermöglicht es, über einen unsicheren Kanal einen geheimen Schlüssel zwischen zwei Parteien zu vereinbaren. Die Durchführung von Diffie-Hellman erfolgt auf einer vorgegebenen Parametermenge, welche aus einem endlichen Körper, auch **"Galoiskörper"** genannt, und einem erzeugenden Element, dem sogenannten Generator, besteht.

Die Implementierung mittels elliptischer Kurven ist als Elliptic Curve Diffie-Hellman **(ECDH)** bekannt, jedoch gibt es mehrere weitere Ausführungsvarianten, die dem Fachmann bekannt sind und die nach Ausführungsformen der Erfindung verwendet werden.

Eine "Application Protocol Data Unit" **(APDU)** ist eine Kommunikationseinheit zwischen einer Chipkarte und einer Chipkartenanwendung, also eine Menge an Daten, die während einer einzelnen Anfrage oder während einer einzelnen Antwort bei der Ausführung eines Anfrage-Antwort Protokolls zwischen einem Dokument und einem Lesegerät ausgetauscht wird. Vorzugsweise ist diese Kommunikationseinheit nach dem ISO-Standard 7816-4 oder verwandten Standards spezifiziert. Eine APDU ist eine Kommunikationseinheit auf Anwendungsebene. Im OSI-Schichtenmodel entspricht das der Schicht 6. Die APDU wird unterschieden in "command APDUs" (CAPDUs), welche Kommandos an die Chipkarte bzw. das Dokument, welches diese enthält, übermitteln, und "response APDUs" (RAPDUs), die die Antwort des Dokuments auf ein Kommando übermittelt. Vorzugsweise findet die Kommunikation mittels APDUs nach Etablierung der Kommunikation mittels "Answer to Reset" und optionaler Protokollauswahl "Protocol Type Selection" statt. Die Struktur von command APDU und response APDU sind vorzugsweise so beschaffen wie in der Norm ISO 7816-4 festgelegt.

Eine **"Authentisierung"** eines Dokuments gegenüber einem Lesegerät ist die Erbringung eines Nachweises (verifizierbaren Datums) einer behaupteten Eigenschaft des Dokuments gegenüber dem Lesegerät. Das Lesegerät kann durch Überprüfung (Verifikation) dieses Nachweises das Dokument "authentifizieren", d.h., die Echtheit des Nachweises und damit auch die Echtheit der behaupteten Eigenschaften akzeptieren. Während eine Authentisierung also sich auf Schritte bezieht, die von dem Dokument durchzuführen sind, bezieht sich der Begriff der "Authentifizierung" auf Schritte, die vom Lesegerät durchzuführen sind. Das Ergebnis eines beidseitig erfolgreich durchgeführten Authentisierungs- und Authentifizierungs-Prozesses ist, dass sich das Dokument gegenüber dem Lesegerät authentisiert hat und das Lesegerät das Dokument authentifiziert hat.

Unter einer **"ersten Parametermenge"** wird im Folgenden eine Menge aus ein oder mehreren Parameterwerten für einen entsprechenden Satz an Parametern für DH bzw. ECDH verstanden.

In einem Aspekt betrifft die Erfindung ein Verfahren zur Authentisierung eines Dokuments gegenüber einem Lesegerät unter Verwendung eines Diffie-Hellman-Protokolls. In dem Lesegerät ist eine erste Parametermenge in einem nicht-flüchtigen Speicher gespeichert. Die erste Parametermenge enthält Parameterwerte, die zur Durchführung des Diffie-Hellman-Protokolls notwendig sind. Die Kommunikation zwischen dem Dokument und dem Lesegerät erfolgt nach einem Anforderungs-Antwort Chipkartenprotokoll. Das Verfahren umfasst:
- Erzeugung eines ersten Datenwertes durch das Dokument;
- Berechnung eines Chiffrats, das zumindest den ersten Datenwert beinhaltet, mittels eines geheimen Schlüssels durch das Dokument;
- Übertragung des Chiffrats vom Dokument an das Lesegerät;
- Entschlüsseln des Chiffrats durch das Lesegerät mittels des geheimen Schlüssels;
- erste Durchführung des Diffie-Hellman-Protokolls zur Vereinbarung eines ersten gemeinsamen Geheimnisses zwischen dem Dokument und dem Lesegerät, wobei die erste Durchführung des Diffie-Hellman-Protokolls auf der ersten Parametermenge beruht;
- zweite Durchführung des Diffie-Hellman-Protokolls zur Vereinbarung eines zweiten gemeinsamen Geheimnisses zwischen dem Dokument und dem Lesegerät, wobei die zweite Durchführung des Diffie-Hellman-Protokolls auf einer zweiten Parametermenge beruht, wobei die zweite Parametermenge aus der ersten Parametermenge sowie dem ersten gemeinsamen Geheimnis und dem ersten Datenwert abgeleitet sind;
- Authentisierung des Dokuments gegenüber dem Lesegerät mit Hilfe des zweiten Geheimnisses.

Die erste Diffie-Hellman Protokoll Durchführung beruht also auf einer vorgegebenen, "statischen" ersten Parametermenge, und kann daher auch als "static DH" bezeichnet werden. Die zweite Diffie-Hellman Protokolldurchführung beruht hingegen auf einer zweiten, dynamisch u.a. vom ersten Datenwert abgeleiteten Parametermenge, die nur den beiden Teilnehmern bekannt ist. Die 2. Diffie-Hellman Protokoll Durchführung kann daher auch als "ephemeral DH" bezeichnet werden.

Diese Merkmale können vorteilhaft sein, da die zweifache Durchführung des Diffie-Hellman-Protokolls eine sichere Vereinbarung des zweiten gemeinsamen Geheimnisses, mit welchem sich das Dokument gegenüber dem Lesegerät authentisieren kann, ermöglicht, ohne dass es dafür notwendig ist, das zu vereinbarende Geheimnis selbst auszutauschen. Dies erhöht die Sicherheit ganz erheblich, denn es ermöglicht den Kommunikationspartnern über einen unsicheren Kanal auszutauschen, um ein gemeinsames Geheimnisgeheimnis zu vereinbaren, welches auch einen potentiellen Mithörer der ausgetauschten Nachrichten nicht erlaubt, dieses Geheimnis in Erfahrung zu bringen.

In einem weiteren Aspekt können diese Merkmale vorteilhaft sein, da sie eine Authentisierung des Dokuments gegenüber dem Lesegerät mit einer geringeren Anzahl an Anfrage-Antwort Zyklen bewerkstelligen, als dies bei Verwendung vorbekannter Protokolle möglich ist. So greift etwa im PACE Verfahren zunächst das Lesegerät in einem eigenen Lesebefehl auf das Dokument zu um zu ermitteln, welche Algorithmen und Parameter zur Durchführung der zur Authentisierung benötigten Kryptographischen Protokolle vom Dokument unterstützt werden. Ein derartiger Leseschritt ist nun nicht mehr erforderlich, da das Lesegerät die zu verwendenden Parameter in Form der ersten Parametermenge bereits gespeichert hat und diese Parameter und zugehörigen Algorithmen auch von dem Dokument unterstützt werden. Die erste Parametermenge, die als Basis der lesegerätseitigen wie auch dokumentseitigen Durchführung des Diffie-Hellman-Protokolls dient, ist also bereits in dem Lesegerät gespeichert, wenn mit der Durchführung des DH Protokolls begonnen wird. Die erste Parametermenge kann zum Beispiel bei der Herstellung, Initialisierung oder Konfiguration des Lesegeräts darin gespeichert werden. Dadurch wird das Lesegerät in die Lage versetzt, auf eine Anfrage an das Dokument, ob und gegebenenfalls welche ersten Parametermengen von dem Dokument unterstützt werden, zu verzichten, so dass das Verfahren beschleunigt werden kann.

Nach manchen Ausführungsformen erfolgt nach erfolgreicher Authentisierung des Dokuments gegenüber dem Lesegerät zudem noch eine Berechnung eines Lesegerät-Authentisierungswertes, der an das Dokument zum Zwecke der Authentifizierung des Lesegerätes gegenüber dem Dokument gesendet wird.

Nach manchen Ausführungsformen können das Lesegerät und das Dokument basierend auf dem zweiten gemeinsamen Geheimnis Sitzungsschlüssel ableiten, die zum Aufbau eines sicheren Datenübertragungskanals verwendet werden können. Dies ist vorteilhaft, da Daten, welche über den sicheren Datenübertragungskanal zwischen Dokument und Lesegerät ausgetauscht werden, von Dritten, die nicht im Besitz der Sitzungsschlüssel sind, nicht mehr abgehört bzw. interpretiert werden können.

Typischerweise ist der Lesegerät-Authentifizierungswert ein anderer als der Dokument-Authentisierungswert. Nach Ausführungsformen nach welchen eine gegenseitige Authentisierung sowohl von Dokument als auch von Lesegerät stattfindet, berechnet sowohl das Dokument als auch das Lesegerät jeweils den Dokument-Authentisierungswert als auch den Lesegerät-Authentisierungswert entweder zum Zwecke der eigenen Authentisierung oder als Referenzwert zur Authentifizierung des Gegenübers.

Nach Ausführungsformen erfolgt unmittelbar nach der Authentisierung des Dokuments gegenüber dem Lesegerät die Ausgabe eines Signals durch das Lesegerät, dass sich das Dokument erfolgreich authentisiert hat. Es werden keine weiteren Daten mehr zwischen Dokument und Lesegerät ausgetauscht. Vielmehr weist das Signal, das beispielsweise auf einem Display des Lesegeräts angezeigt wird, das Dokument als authentifiziertes Dokument und/oder einen Nutzer, dem dieses Dokument zugewiesen ist, als authentisierten Nutzer aus. Das besagte Signal kann jedoch auch als Trigger zum automatischen Ausführen eines Datenverarbeitungsschrittes oder mechanischen Prozessierungsschritts dienen. Dies kann vorteilhaft sein, da durch den Verzicht auf den Aufbau einer geschützten Verbindung das Gesamtverfahren erheblich beschleunigt werden kann. So kann sich beispielsweise ein Nutzer eines Dokumentes mithilfe eines Dokumentes mit den besagten Eigenschaften sehr schnell gegenüber einem Lesegerät bzw. mit dem Lesegerät assoziierten Systemen (Computersysteme, Datenspeicher, geschützte Räume oder Gebäude, geschützte Maschinen oder Funktionen derselben) authentisieren, ohne dass der Nutzer die Beendigung weiterer Berechnungsschritte zum Aufbau eines geschützten Datenübertragungskanals abwarten müsste.

Die erste Parametermenge besteht für DH aus einer Primzahl p und einem erzeugenden Element ("Generator") G eines Galoiskörpers, auf welchem das Diffie-Hellman Protokoll durchgeführt wird. Falls das Diffie-Hellman-Protokoll als ECDH ausgeführt wird, beinhaltet die erste Parametermenge vorzugsweise die Kurvenparameter der Kurve, auf welcher der ECDH basiert. Die Kurvenparameter umfassen eine Primzahl p, zwei Koeffizienten a und b einer die Kurve beschreibenden Kurvengleichung, G als das erzeugende Element der Kurve, die Ordnung n der von G erzeugten Untergruppe, und optional einem Kofaktor h.

Nach Ausführungsformen der Erfindung umfasst die erste Durchführung des Diffie-Hellman Protokolls:
- Erzeugung eines ersten privaten Dokument-Schlüssels und Berechnung eines ersten öffentlichen Dokument-Schlüssels durch das Dokument, wobei die erste Parametermenge in die Berechnung des ersten öffentlichen Dokument-Schlüssels eingeht;
- Erzeugung eines ersten privaten Lesegerät-Schlüssels und Berechnung eines ersten öffentlichen Lesegerät-Schlüssels durch das Lesegerät, wobei die erste Parametermenge in die Berechnung des ersten öffentlichen Lesegerät-Schlüssels eingeht;
- Senden des ersten öffentlichen Dokument-Schlüssels vom Dokument an das Lesegerät, wobei der erste öffentliche Dokument-Schlüssel und der erste private Lesegerät-Schlüssel in die lesegerätseitige Berechnung des ersten Geheimnisses eingeht;
- Senden des ersten öffentlichen Lesegerät-Schlüssels vom Lesegerät an das Dokument, wobei der erste öffentliche Lesegerät-Schlüssel und der erste private Dokument-Schlüssel in die dokumentseitige Berechnung des ersten Geheimnisses eingehen.

Die zweite Durchführung des Diffie-Hellman Protokolls umfasst:
- dokumentseitiges und lesegerätseitiges Berechnen der zweiten Parametermenge aus der ersten Parametermenge, wobei der erste Datenwert und das erste gemeinsame Geheimnis in die Berechnung der zweiten Parametermenge eingehen;
- Erzeugung eines zweiten privaten Dokument-Schlüssels und Berechnung eines zweiten öffentlichen Dokument-Schlüssels durch das Dokument, wobei die zweite Parametermenge in die Berechnung des zweiten öffentlichen Dokument-Schlüssel eingeht;
- Erzeugung eines zweiten privaten Lesegerät-Schlüssels und Berechnung eines zweiten öffentlichen Lesegerät-Schlüssels durch das Lesegerät, wobei die zweite Parametermenge in die Berechnung des zweiten öffentlichen Lesegerät-Schlüssels eingeht;
- Senden des zweiten öffentlichen Dokument-Schlüssels vom Dokument an das Lesegerät, wobei der zweite öffentliche Dokument-Schlüssel und der zweite private Lesegerät-Schlüssel in die lesegerätseitige Berechnung des zweiten Geheimnisses eingehen;
- Senden des zweiten öffentlichen Lesegerät-Schlüssels vom Lesegerät an das Dokument, wobei der öffentliche zweite Lesegerät-Schlüssel und der zweite private Dokument-Schlüssel in die dokumentseitige Berechnung des zweiten Geheimnisses eingehen.

Der erste öffentliche Dokument-Schlüssel und der erste private Dokument-Schlüssel bilden zusammen ein asymmetrisches kryptographisches Schlüsselpaar. Auch die folgenden Schlüsselpaare bilden jeweils zusammen ein asymmetrisches kryptographisches Schlüsselpaar: Der zweite öffentliche Dokument-Schlüssel und der zweite private Dokumentschlüssel; der erste öffentliche Lesegerät-Schlüssel und der erste private Lesegerät-Schlüssel; und der zweite öffentliche Lesegerät-Schlüssel und der zweite private Lesegerät-Schlüssel.

Vorzugsweise umfasst die Authentisierung des Dokuments gegenüber dem Lesegerät die folgenden Schritte:
- Berechnen eines Dokument-Authentisierungswertes aus dem zweiten gemeinsamen Geheimnis durch das Dokument;
- Übermittlung des Dokument-Authentisierungswertes vom Dokument an das Lesegerät; und
- Überprüfung des Dokument-Authentisierungswertes durch das Lesegerät.

Nach Ausführungsformen der Erfindung ist die erste Parametermenge:
- in einem nicht-flüchtigen Speicher des Dokuments gespeichert; oder
- als eine ausgewählte erste Parametermenge zusammen mit ein oder mehreren weiteren ersten Parametermengen in dem nicht-flüchtigen Speicher des Dokuments gespeichert; oder
- aus einer Vielzahl von ersten Parametermengen, die in dem nicht-flüchtigen Speicher gespeichert sind, durch Empfang eines Auswahlsignals ausgewählt worden, wobei im Zuge einer Übertragung des Auswahlsignals vom Lesegerät an das Dokument auch der erste öffentliche Lesegerät-Schlüssel vom Lesegerät an das Dokument übertragen wurde; oder
- vom Lesegerät an das Dokument übertragen worden, wobei im Zuge der Übertragung auch der erste öffentliche Lesegerät-Schlüssel an das Dokument übertragen wurde.

Diese Merkmale können vorteilhaft sein, da sie eine Authentisierung des Dokuments gegenüber dem Lesegerät mit einer geringeren Anzahl an Anfrage-Antwort Zyklen bewerkstelligen, als dies bei Verwendung vorbekannter Protokolle möglich ist. So greift etwa im PACE Verfahren zunächst das Lesegerät in einem eigenen Lesebefehl auf das Dokument zu um zu ermitteln, welche Algorithmen und Parameter zur Durchführung der zur Authentisierung benötigten Kryptographischen Protokolle vom Dokument unterstützt werden. Gemäß der besagten Ausführungsform ist es nicht erforderlich, dass das Lesegerät diese Abfrage sendet. Es ist auch nicht erforderlich, dass das Lesegerät eine Auswahl der ersten Parameter und den ersten öffentlichen Lesegerät-Schlüssel jeweils in Form separater Nachrichten an das Dokument sendet. Vielmehr wird dadurch, dass das Lesegerät die erste Parametermenge bereits "kennt" und bei der Berechnung des ersten öffentlichen Lesegerät-Schlüssels heranziehen kann, ermöglicht, dass das Lesegerät die dokumentseitige Durchführung des ersten Diffie-Hellman-Protokolls dadurch initiiert, dass es einen mittels der ersten Parametermenge berechneten ersten öffentlichen Lesegerät-Schlüssel an das Dokument sendet. Nach Ausführungsformen kann die erste Parametermenge oder ein Ausweissignal zur Auswahl der ersten Parametermenge zusammen mit dem ersten öffentlichen Lesegerät-Schlüssel an das Dokument gesendet werden. Dadurch wird die Anzahl der Anfrage-Antwort-Zyklen reduziert und das Verfahren beschleunigt.

Nach Ausführungsformen handelt es sich bei dem ersten Datenwert um eine Zufallszahl. Gemäß manchen Ausführungsformen sind die generierten ersten und zweiten geheimen Lesegerät-Schlüssel und ersten und zweiten geheimen Dokument-Schlüssel ebenfalls Zufallszahlen.

Nach Ausführungsformen der Erfindung wird der erste Datenwert zusammen mit ein oder mehreren zweiten Datenwerten an das Lesegerät übertragen. Die zweiten Datenwerte können unverschlüsselt zusammen mit dem Chiffrat, das den ersten Datenwert beinhaltet, übertragen werden. Vorzugsweise werden die ein oder mehreren zweiten Datenwerte jedoch zusammen mit dem ersten Datenwert bei der Berechnung des Chiffrats verschlüsselt und werden als Bestandteil des Chiffrats übermittelt.

Vorzugsweise gehören die ein oder mehreren zweiten Datenwerte einer Gruppe von Datenwerten an, welche beinhaltet:
- Datenwert zum Nachweis einer Berechtigung des Nutzers, z.B. ein Zulassungscode, ein Passwort, etc.;
- Datenwert zum Nachweis der Identität des Nutzers, z.B. ein biometrisches Merkmal des Nutzers, z.B. ein Fingerprint;
- Datenwert zum Nachweis der Identität des Dokumentes, z.B. ein Zertifikat, eine Seriennummer, eine CAN, eine MRZ, ein auf dem Dokument gedruckter Code, z.B. ein Bar-Code oder QR Code;
- Datenwert zur Bezeichnung einer Applikation, eines Gerätes oder eines geographischen Gebiets, zu welchem eine Zugangsberechtigung angefordert wird;
- eine Dokument-ID;
- einen Identifikator der Berechtigung, deren Erteilung angefordert wird; z.B. einen Identifikator für das Recht, bestimmte Daten zu lesen, bestimmte Räume oder Gebäude zu betreten, eine Kontrolle zu passieren, etc.
- eine Angabe eines Zeitraums während welchem die Berechtigung, deren Erteilung angefordert wird, gelten soll;
- einen Zähler von bisher erfolgten Authentifizierungsversuchen gegenüber dem Lesegerät.

Ein vorteilhafter Aspekt der Verwendung von ein oder mehreren zweiten Datenwerten besteht darin, dass zusätzlich zu den ersten Datenwert, welcher der Authentisierung des Dokuments gegenüber dem Lesegerät dient, ein oder mehrere weitere (zweite) Datenwerte zur Verfügung stehen, die eine feingranulare Kontrolle von Berechtigungen des Nutzers, dem das Dokument zugeordnet ist, ermöglicht wird. So können die zweiten Datenwerte dazu verwendet werden, festzulegen, in welchem Zeitraum ein Nutzer eines bestimmten Dokumentes bestimmte Programmroutinen durchführen darf, bestimmte Gebäudeteile betreten darf oder sich Zugang zu bestimmten Daten verschaffen darf.

Nach besagten Ausführungsformen beinhaltet das Verfahren ferner:
- Empfang der ein oder mehreren zweiten Datenwerte durch das Lesegerät,
- falls die ein oder mehreren zweiten Datenwerte als Bestandteil des Chiffrats übertragen wurden, Entschlüsselung auch der ein oder mehreren zweiten Datenwerte durch das Lesegerät;
- Überprüfung durch das Lesegerät, ob die ein oder mehreren zweiten Datenwerte vordefinierte Kriterien erfüllen.
- Signalisierung der Berechtigung des Nutzers nur, falls das Dokument sich erfolgreich authentisiert hat und zudem jeder der ein oder mehreren zweiten Datenwerte die vordefinierten Kriterien erfüllen.

Diese Merkmale können vorteilhaft sein, weil sie eine sehr feingranulare Kontrolle der Zugriffsrechte des Nutzers eines Dokuments ermöglichen. Durch die Entkopplung der Authentisierungsfunktion, die über den ersten Datenwert realisiert wird, von den ein oder mehreren zweiten Datenwerten, die zur Bestimmung und Prüfung spezifischer Rechte dienen, ist es möglich, ein Verfahren bereitzustellen, welches sowohl eine Authentisierung des Dokuments als auch eine zusätzliche, applikationsspezifische, dokumentspezifische, funktionsspezifische und/oder zeitspezifische Kontrolle der Zuweisung einer Berechtigung ermöglicht. Ausführungsformen, in welchen in dem Dokument mehrere zweite Datenwerte gespeichert sind, deren Vorliegen bzw. Übermittlung an das Lesegerät jeweils zur Gewährung unterschiedlicher Rechte erforderlich sind, ist vorteilhaft, da der Nutzer das gleiche Dokument verwenden kann, um sich bei verschiedenen Sicherheitssystemen sowohl zu authentisieren als auch als berechtigt im Hinblick auf eine bestimmte Funktion auszuweisen. So kann etwa ein Dokument einen zweiten Datenwert beinhalten, der den Nutzer Zugang zu einem Rechenzentrum einer Firma gewährt, und einen weiteren zweiten Datenwert, der den Nutzer als berechtigt ausweist, auf einen bestimmten Datensatz zuzugreifen.

Falls die zweiten Datenwerte beispielsweise einen Zeitraum spezifizieren, während welchem einem erfolgreich authentifizierten Nutzer eine Berechtigung gewährt werden soll, kann die Prüfung beispielsweise einen Abgleich mit dem Kriterium beinhalten, dass die aktuelle Zeit innerhalb des besagten Zeitraumes liegen soll.

Nach Ausführungsformen hat das Dokument den Zähler, der die Anzahl der bisher erfolgten Authentifizierungsversuche angibt, in einem Nicht-flüchtigen Speichermedium des Dokuments gespeichert und erhöht den Zähler automatisch bei jedem Authentisierungsversuch. Nach bevorzugten Ausführungsformen wird der Zähler im Falle einer erfolgreichen Authentisierung auf den Wert Null zurückgesetzt. Die Verwendung eines Zählers als einen der ein oder mehreren zweiten Datenwerte kann vorteilhaft sein, da diese einen Schutz gegen Replay-Attacken darstellt.

Nach Ausführungsformen beinhaltet die Berechnung des Dokument-Authentisierungswertes durch das Dokument:
- Ableiten eines weiteren Schlüssels aus dem zweiten gemeinsamen Geheimnis H';
- Berechnen des Dokument-Authentisierungswertes mittels des weiteren Schlüssels, vorzugsweise durch Anwenden einer MAC-Funktion auf den weiteren Schlüssel.

Vorzugsweise erfolgt die Ableitung des weiteren Schlüssels durch Anwenden einer Ableitungsfunktion auf das zweite gemeinsame Geheimnis. Bei der Ableitungsfunktion kann es sich beispielsweise um eine Hash-, Hmac-, oder Tls-Funktion handeln.

Vorzugsweise wird zur Authentisierung des Dokuments gegenüber dem Lesegerät ein Vergleichswert für den Dokument-Authentisierungswert durch das Lesegerät berechnet. Dieser Vergleichswert wird mit dem empfangenen Dokument-Authentisierungswert durch das Lesegerät verglichen.

Vorzugsweise erfolgt die Berechnung des Vergleichswerts durch das Lesegerät dadurch, dass das Lesegerät seinerseits den weiteren Schlüssel durch Anwenden der Ableitungsfunktion auf das zweite gemeinsame Geheimnis, der dem Lesegerät ja ebenfalls "bekannt" ist, mit der besagten Ableitfunktion ableitet, und dann die gleiche MAC Funktion auf diesen weiteren Schlüssel anwendet, welche schon vom Dokument zur Berechnung des Dokument-Authentisierungswertes verwendet wurde.

### A) Ausführungsformen, wonach die Authentisierung des Dokuments im optimalen Fall nach zwei Anfrage-Antwort Zyklen erfolgen kann

Vorzugsweise sind bei den in Kapitel A) beschriebenen Ausführungsformen sowohl das Lesegerät als auch das Dokument bereits vor Beginn des Verfahrens auf eine gemeinsamen zu verwendende erste Parametermenge festgelegt, oder die Festlegung der vom Dokument zu verwendenden ersten Parametermenge erfolgt zusammen mit der Übermittlung des ersten öffentlichen Lesegerät-Schlüssels vom Lesegerät an das Dokument. Vorzugsweise initialisiert der Empfang des ersten öffentlichen Lesegerät-Schlüssels die Durchführung der dokumentseitigen Diffie-Hellman-Protokolle Schritte sowie nachfolgender dokumentseitiger Berechnungsschritte.

Nach Ausführungsformen der Erfindung erfolgt die Berechnung des Chiffrats und des ersten öffentlichen Dokument-Schlüssels durch das Dokument in Antwort auf einen Empfang einer ersten CAPDU, wobei zum Senden des ersten öffentlichen Lesegerät-Schlüssels im Zuge der ersten Durchführung des Diffie-Hellman Protokolls zumindest der berechnete erste öffentliche Lesegerät-Schlüssel vom Lesegerät an das Dokument als Bestandteil einer ersten CAPDU gesendet wird. Der berechnete erste öffentliche Dokument-Schlüssel wird vom Dokument an das Lesegerät zusammen mit dem Chiffrat als Bestandteil einer ersten RAPDU im Zuge der ersten Durchführung des Diffie-Hellman Protokolls gesendet.

Falls das Dokument bereits auf die erste Parametermenge festgelegt ist, ist deren Übermittlung bzw. Auswahl mithilfe der ersten CAPDU nicht erforderlich. Nach anderen Ausführungsformen beinhaltet die erste CAPDU neben dem ersten öffentlichen Lesegerät-Schlüssel auch die erste Parametermenge oder eine Auswahl derselben.

Nach Ausführungsformen der Erfindung werden in Antwort auf einen Empfang einer ersten RAPDU, die vom Dokument an das Lesegerät gesendet wurde und den ersten öffentlichen Dokument-Schlüssel enthält, durch das Lesegerät die folgenden Schritte durchgeführt:
- eine lesegerätseitige Berechnung des ersten gemeinsamen Geheimnisses;
- die Entschlüsselung des Chiffrats;
- die lesegerätseitige Berechnung der zweiten Parametermenge;
- die Erzeugung des zweiten privaten Lesegerät-Schlüssels und die Berechnung des zweiten öffentlichen Lesegerät-Schlüssels;
- das Senden des zweiten öffentlichen Lesegerät-Schlüssels vom Lesegerät an das Dokument als Bestandteil einer zweiten CAPDU.

Nach Ausführungsformen der Erfindung werden in Antwort auf einen Empfang einer zweiten CAPDU, die vom Lesegerät an das Dokument übertragen wurde und die den zweiten öffentlichen Lesegerät-Schlüssel enthält, durch das Dokument die folgenden Schritte durchgeführt:
- die dokumentseitige Berechnung des ersten gemeinsamen Geheimnisses;
- die dokumentseitige Berechnung der zweiten Parametermenge;
- die dokumentseitige Erzeugung des zweiten privaten Dokument-Schlüssels und die dokumentseitige Berechnung des zweiten öffentlichen Dokument-Schlüssels;
- die dokumentseitige Berechnung des Dokument-Authentisierungswertes;
- das Senden des zweiten öffentlichen Dokument-Schlüssels vom Dokument an das Lesegerät zusammen mit dem Dokument-Authentisierungswert als Bestandteil einer zweiten RAPDU wobei die Authentisierung des Dokuments gegenüber dem Lesegerät mit Hilfe des Dokument-Authentisierungswertes erfolgt.

Nach Ausführungsformen der Erfindung werden der zweite öffentliche Dokument-Schlüssel und ein Dokument-Authentisierungswert vom Dokument an das Lesegerät als Bestandteil einer zweiten RAPDU gesendet. In Antwort auf den Empfang der zweiten RAPDU werden die folgenden Schritte durch das Lesegerät durchgeführt:
- die lesegerätseitige Berechnung des zweiten Geheimnisses;
- eine Überprüfung des empfangenen Dokument-Authentisierungswertes, wobei im Falle einer erfolgreichen Überprüfung das Dokument sich gegenüber dem Lesegerät authentisiert.

Nach Ausführungsformen der Erfindung sind eine Vielzahl von Passwörtern (z.B. PINs) in dem nicht-flüchtigen Speicher des Dokuments gespeichert, wobei für jedes der Passwörter ein für die Chiffratberechnung zu verwendender Schlüssel berechnet wird, wobei die Berechnung und Speicherung des Chiffrats für jedes dieser Passwörter durchgeführt wird, sodass nach jedem Bootvorgang des Dokuments im Dokument ein erster öffentlicher Dokument-Schlüssel und für jedes auf dem Dokument gespeicherte Passwortᵢ ein zugehöriges Chiffrat gespeichert sind. Die Berechnung der Passwort-spezifischen ersten öffentlichen Dokument-Schlüssel und Chiffrate erfolgt hier also während oder unmittelbar im Anschluss an den Bootvorgang und nicht in Antwort auf den Erhalt einer CAPDU des Lesegeräts. Diese Merkmale können vorteilhaft sein, in dem sie das Verfahren weiter beschleunigen: da das Dokument in der Regel die Chiffrate bereits berechnet hat, wenn es die erste CAPDU vom Lesegerät empfängt, muss es nach dem Erhalt der ersten CAPDU, die die erste Parametermenge beinhaltet oder auswählt, nur noch die ersten geheimen und öffentlichen Dokument-Schlüssel berechnen. Die Zeit bis zur Berechnung des ersten öffentlichen Dokument-Schlüssels, und damit die Zeit bis zum Versand der ersten RAPDU mit dem zweiten öffentlichen Schlüssel, wird dadurch reduziert.

Nach Ausführungsformen der Erfindung enthält die erste CAPDU eine Passwort-ID, z.B. eine PIN-ID. In Antwort auf den Empfang der ersten CAPDU durch das Dokument, wählt das Dokument eines der in dem Dokument gespeicherten Passwörter, das durch die Passwort-ID identifiziert wird, aus. Außerdem wählt das Dokument das für das ausgewählte Passwortᵢ berechneten Chiffrat und ersten öffentlichen Dokument-Schlüssel zum Versand an das Lesegerät als Bestandteil der ersten RAPDU aus. Diese Merkmale können vorteilhaft sein, da auch hier die Berechnung des bzw. der Chiffrate bereits vor Erhalt der ersten CAPDU beendet sein kann. Das vor berechnete und durch die Passwort-ID identifizierten Chiffrat muss also nur noch gelesen und braucht nicht mehr berechnet werden. Dadurch wird die Antwortzeit bis zum Versand des ersten öffentlichen Dokument-Schlüssels an das Lesegerät reduziert.

Ausführungsformen der Erfindung basieren auf standardisierten Kommandos, die weitgehend an die Kommandostruktur bestehender Anfrage-Antwort Protokolle wie etwa PACE angepasst sind. Dadurch kann der erforderliche Implementationsaufwand deutlich reduziert werden.

### B) "Vor"-Speicherung der ersten Parametermenge oder deren Auswahl im Dokument

Nach weiteren Ausführungsformen ist die erste Parametermenge oder deren Auswahl in dem Dokument bereits vor Empfang einer ersten CAPDU, die den ersten öffentlichen Lesegerät-Schlüssel enthält, gespeichert. Nach weiteren Ausführungsformen sind darüber hinaus auch die oben genannten Auswahlparameter in dem Dokument bereits vor Empfang einer ersten CAPDU, die den ersten öffentlichen Lesegerät-Schlüssel enthält, gespeichert. Dies kann vorteilhaft sein, da sämtliche Berechnungen für die Antwort auf das erste Kommando direkt nach den Bootvorgang des Dokuments durchgeführt werden können. Damit kann die Zeit zwischen dem Empfang des ersten Kommandos durch das Dokument und dem Senden der Antwort auf dieses Kommando weiter verringert werden.

Für Implementierungen der im Folgenden genannten Ausführungsformen wurde eine 50-80% prozentige Zeitersparnis im Vergleich zur herkömmlichen Authentisierungsverfahren veranschlagt. Diese hohe Zeitersparnis liegt daran, dass im Vergleich zu vorbekannten Verfahren eine geringere Anzahl von Anfrage-Antwortzyklen zur Authentisierung des Dokuments notwendig sind und die Anzahl und/oder Dauer der Berechnungsschritte zwischen dem Empfang eines Kommandos und dem Versand einer Antwort reduziert wird.

Nach Ausführungsformen der Erfindung ist die erste Parametermenge in dem nicht-flüchtigen Speicher des Dokuments gespeichert. Das Dokument führt bereits vor oder parallel zu dem Empfang einer ersten CAPDU, die den ersten öffentlichen Lesegerät-Schlüssel enthält, die folgenden Schritte aus:
- das Erzeugen des ersten Datenwertes;
- die Berechnung des Chiffrats;
- die Erzeugung des ersten privaten Dokument-Schlüssels;
- die Berechnung des ersten öffentlichen Dokument-Schlüssels;
- eine Speicherung des Chiffrats und des ersten öffentlichen Dokument-Schlüssels.

Nach Ausführungsformen der Erfindung wird der zweite öffentlichen Dokument-Schlüssel vom Dokument an das Lesegerät in unmittelbarer Antwort auf den Empfang der ersten CAPDU als Bestandteil einer ersten RAPDU vom Dokument an das Lesegerät gesendet. Die erste RAPDU enthält das gespeicherte Chiffrat und den gespeicherten ersten öffentlichen Dokument-Schlüssel.

Nach Ausführungsformen der Erfindung wird die Erzeugung des ersten privaten Dokument-Schlüssels, die Berechnung des ersten öffentlichen Dokument-Schlüssels, die Speicherung des Chiffrats und des ersten öffentlichen Dokument-Schlüssels im Zuge eines Boot-Vorgangs des Dokuments, z.B. im Zuge eines Bootvorgangs einer auf dem Dokument befindlichen Chipkarte, oder unmittelbar im Anschluss an diesen Boot-Vorgang durchgeführt.

Nach Ausführungsformen der Erfindung werden in Antwort auf den Empfang der ersten CAPDU, die den ersten öffentlichen Lesegerät-Schlüssel enthält, und vor dem Empfang einer zweiten CAPDU, die den zweiten öffentlichen Lesegerät-Schlüssel enthält, die folgenden Schritte durch das Dokument durchgeführt:
- die dokumentseitige Berechnung des ersten gemeinsamen Geheimnisses;
- die dokumentseitige Berechnung der zweiten Parametermenge;
- die Erzeugung des zweiten privaten Dokument-Schlüssels und die Berechnung des zweiten öffentlichen Dokument-Schlüssel;
- Speicherung des zweiten privaten und des zweiten öffentlichen Dokument-Schlüssels im Dokument.

Nach Ausführungsformen der Erfindung sind in dem nicht-flüchtigen Speicher des Dokuments der erste öffentliche Dokument-Schlüssel und das Chiffrat bereits vor Erhalt der ersten CAPDU gespeichert, wobei das Dokument in Antwort auf den Empfang der ersten CAPDU die folgenden Schritte vor oder zeitlich parallel zu den in der oben beschriebenen Ausführungsform bezeichneten Schritten (dokumentseitige Berechnung des ersten gemeinsamen Geheimnisses, der zweiten Parametermenge und der zweiten privaten und öffentlichen Dokument-Schlüssel) ausführt:
- Lesen des gespeicherten ersten öffentlichen Dokument-Schlüssels und des Chiffrats;
- Senden des gelesenen ersten öffentlichen Dokument-Schlüssels und des Chiffrats als Bestandteil einer ersten RAPDU an das Lesegerät, wobei das Senden des ersten öffentlichen Dokument-Schlüssels im Zuge der ersten Durchführung des Diffie-Hellman Protokolls bewirkt wird.

Nach Ausführungsformen der Erfindung werden in Antwort auf den Empfang einer zweiten CAPDU des Lesegeräts durch das Dokument die folgenden Schritte durch das Dokument durchgeführt, wobei die zweite CAPDU den zweiten öffentlichen Lesegerät-Schlüssel enthält:
- Lesen des gespeicherten zweiten öffentlichen Dokument-Schlüssels;
- die Berechnung des Dokument-Authentisierungswertes;
- Übertragung des Dokument-Authentisierungswertes zusammen mit dem zweiten öffentlichen Dokument-Schlüssel als Bestandteil einer zweiten RAPDU an das Lesegerät, wobei durch die Übertragung der RAPDU das Senden des zweiten öffentlichen Dokument-Schlüssels im Zuge der zweiten Durchführung des Diffie-Hellman Protokolls bewirkt wird.

Nach Ausführungsformen der Erfindung empfängt das Lesegerät die zweite RAPDU, wobei die zweite RAPDU den zweiten öffentlichen Dokument-Schlüssel und den Dokument-Authentisierungswert enthält. In Antwort auf den Empfang der zweiten RAPDU führt das Lesegerät die folgenden Schritte zur Authentifizierung des Dokuments durch:
- die lesegerätseitige Berechnung des zweiten gemeinsamen Geheimnisses;
- eine Prüfung des empfangenen Dokument-Authentisierungswertes unter Verwendung der zweiten Parametermenge zur Authentifizierung des Dokuments durch das Lesegerät.

Nach Ausführungsformen der Erfindung empfängt das Lesegerät eine erste RAPDU. Die erste RAPDU enthält den ersten öffentlichen Dokument-Schlüssel und das Chiffrat. In Antwort auf den Empfang der ersten RAPDU führt das Lesegerät die folgenden Schritte durch:
- die Entschlüsselung des Chiffrats;
- die lesegerätseitige Berechnung des ersten gemeinsamen Geheimnisses;
- die lesegerätseitige Berechnung der zweiten Parametermenge;
- die Erzeugung des zweiten privaten Lesegerät-Schlüssels und die Berechnung des zweiten öffentlichen Lesegerät-Schlüssels;
- Senden des zweiten öffentlichen Lesegerät-Schlüssels als Bestandteil einer zweiten CAPDU vom Lesegerät an das Dokument im Zuge der zweiten Durchführung des Diffie-Heilman Protokolls.

Nach Ausführungsformen der Erfindung werden ein oder mehrere Auswahlparameter als Bestandteil der ersten CAPDU empfangen, wobei die erste CAPDU den ersten öffentlichen Lesegerät-Schlüssel enthält. Die Auswahlparameter können vorzugsweise einen oder mehrere der folgenden Werte umfassen:
- einen Identifikator des vom Dokument zu verwendenden geheimen Schlüssels zur Berechnung des Chiffrats;
- einen Identifikator des vom Dokument zur Verschlüsselung des ersten sowie optional auch der ein oder mehreren zweiten Datenwerte zu verwendende Algorithmus zur Erzeugung des Chiffrats;
- einen Identifikator des vom Dokument zu verwendenden Algorithmus für die Durchführung des Diffie-Hellman Protokolls;
- Identifikatoren von ein oder mehreren zweiten Datenwerte, welche zusätzlich zu dem ersten Datenwert einen Datensatz ergeben, welcher bei der Berechnung des Chiffrats verschlüsselt wird;
- einen Identifikator eines Wertes, der bei der Berechnung des Dokument-Authentisierungswertes in die Berechnung eingeht;
- einen Identifikator eines Wertes, der bei der Berechnung eines dokumentseitig berechneten Vergleichswertes eines Lesegerät-Authentisierungswertes in die Berechnung eingeht;
- Identifikatoren ein oder mehrerer optionaler, vom Dokument nach dessen Authentisierung gegenüber dem Lesegerät durchzuführender Schritte. Dabei kann es sich z.B. um einen Identifikator handeln, der die Berechnung eines Sitzungsschlüssels zum Aufbau eines geschützten Datenkommunikationskanals bewirkt.

Vorzugsweise sind die analogen, lesegerätseitig zu verwendenden Auswahlparameter, also z.B. ein Identifikator des lesegerätseitig zu verwendenden Algorithmus zur Durchführung des DH-Protokolls, im Lesegerät vorgespeichert, so dass hierfür kein Datenaustausch zwischen Lesegerät und Dokument erforderlich ist.

### C) Weitere Beschleunigung des Verfahrens

Nach Ausführungsformen, die ECDH für die erste und zweite Durchführung des DH-Protokolls verwenden, ist die Länge der verwendeten Schlüssel 256 Bit. Dies garantiert eine sehr hohe Sicherheitsstufe des DH Verfahrens. Nach weiteren Ausführungsformen Entscheidend für die Geschwindigkeit der Berechnungen in dem Dokument beträgt die verwendete Kurvenlänge (d.h., die Bitlänge der Primzahl bzw. Dyade, aus der die elliptische Kurve abgeleitet wird), lediglich 224 Bit oder 192 Bit, nach weiteren Ausführungsformen werden noch kürzere Kurven verwendet. Die Verkürzung der Schlüssellänge kann in Anwendungen, die nicht allerhöchsten Sicherheitsanforderungen genügen müssen, das Authentisierungsverfahren weiter beschleunigen.

Nach Ausführungsformen der Erfindung beinhaltet die Authentisierung des Dokuments eine Überprüfung der ein oder mehreren zweiten Datenwerte. Die Überprüfung erfolgt vor der ersten Durchführung des Diffie-Hellman Protokolls. Die erste Durchführung des Diffie-Hellman Protokolls und die Durchführung der nachfolgenden Berechnungsschritte erfolgt nur, falls die Überprüfung ergibt, dass jeder der ein oder mehreren zweiten Datenwerte ein oder mehrere vorgegebene Kriterien erfüllen.

Alternativ dazu erfolgt die Überprüfung der ein oder mehreren zweiten Datenwerte parallel zur Durchführung des ersten und/oder zweiten Diffie-Hellman Protokolls. Die Durchführung des ersten und zweiten Diffie-Hellman Protokolls oder nachfolgender Berechnungsschritte wird durch das Lesegerät automatisch abgebrochen, falls zumindest einer der ein oder mehreren zweiten Datenwerte die Kriterien nicht erfüllt.

Nach Ausführungsformen der Erfindung umfasst das Verfahren ferner, nur falls der zweite Datenwert die Kriterien erfüllt und das Dokument sich erfolgreich authentisiert hat:
- Senden eines Befehls an einen Verschlussmechanismus, um diesen von einem geschlossenen in einen geöffneten Zustand zu überführen und dem Nutzer Zutritt in oder Zugriff auf einen von dem Verschlussmechanismus geschützten Bereich zu ermöglichen; oder
- Ermöglichung des Zugriffs auf geschützte Daten oder einen geschützten Datenspeicher; oder
- automatisches Ausführen einer vorgegebenen Programmroutine oder einer vorgegebenen Bewegung einer mechanischen Vorrichtung, wobei die vorgegebene Programmroutine oder Bewegung nur von Nutzern mit einer Berechtigung ausgeführt werden können.

Im Falle einer erfolgreichen Authentisierung des Dokuments gegenüber dem Lesegerät umfasst das Verfahren nach manchen Ausführungsformen ferner:
- eine Berechnung eines Lesegerät-Authentisierungswertes unter Verwendung des zweiten gemeinsamen Geheimnisses;
- Senden einer dritten CAPDU mit dem Lesegerät-Authentisierungswert vom Lesegerät an das Dokument;
- Verifizieren des Lesegerät-Authentisierungswertes durch das Dokument;
- Senden einer dritten RAPDU mit einem Ergebnis der besagten Verifikation vom Dokument an das Lesegerät;
- bei erfolgreicher Verifizierung des lesegerätseitigen Lesegerät-Authentisierungswertes durch das Dokument und bei erfolgreicher Verifizierung des Dokument-Authentisierungswertes durch das Lesegerät, Aufbau einer geschützten Kommunikationsverbindung zwischen dem Dokument und dem Lesegerät zur geschützten Datenübertragung.

Diese Merkmale können vorteilhaft sein, da über den geschützten Datenübertragungskanal beispielsweise sensible Nutzer-Daten vom Lesegerät sicher vom Dokument ausgelesen oder auf dieses gespeichert werden können.

Nach Ausführungsformen der Erfindung leitet sich der geheime Schlüssel, der zur Berechnung des Chiffrats verwendet wird, von einem Passwort, z.B. einer CAN oder PIN, die im Dokument gespeichert ist, ab. Lesegerätseitig kann das Passwort in das Lesegerät manuell eingegeben werden (insb. bei einer PIN) oder durch das Lesegerät automatisch, z.B. mittels einer optischen Schnittstelle, erfasst werden (insb. bei einer CAN), und dient zur Ableitung des geheimen Schlüssels, der vom Lesegerät zur Entschlüsselung des Chiffrats verwendet wird. Vorzugsweise erfolgt die Eingabe des Passworts automatisch oder das Passwort ist bereits in dem Lesegerät vorgespeichert. Dies kann vorteilhaft sein, weil eine manuelle Eingabe des Passworts vermieden und das Verfahren dadurch beschleunigt wird.

Nach bevorzugten Ausführungsformen der Erfindung sind der geheime Schlüssel, der zur Berechnung des Chiffrats verwendet wird, oder Teile des geheimen Schlüssels, selbst ein weiteres Chiffrat. Das besagte weitere Chiffrat wird von einem geheimen Administrator-Schlüssel unter Verwendung eines dokumentspezifischen Datenwertes berechnet. Das Lesegerät entschlüsselt zur Entschlüsselung des Chiffrats (E(s)) das besagte weitere Chiffrat mittels des geheimen AdministratorSchlüssels und des Dokument-spezifischen Datenwertes.

Der Umstand, dass sich der zur Generierung des Chiffrats verwendete Schlüssel nicht nur von dem Passwort ableitet, sondern ebenfalls von einem für das System fest vorgegebenen (Administrator-)Schlüssel, kann vorteilhaft sein, weil dadurch verhindert wird, dass bei leicht zugänglichem Passwort (zum Beispiel CAN oder bar Code) die Karte als Kopie hergestellt werden kann.

Vorzugsweise ist der Administratorschlüssel weder auf dem Lesegerät noch dem Dokument gespeichert, sondern wird durch das Lesegerät zum Zwecke der Chiffratentschlüsselung aus einem im Lesegerät gespeicherten Wert abgeleitet. Dies ist vorteilhaft, da eine Speicherung des Administratorschlüssels und des zur Chiffrats-Entschlüsselung letztlich verwendeten Schlüssels unterbleibt und das Verfahren dadurch noch sicherer wird.

In einem weiteren Aspekt betrifft die Erfindung ein Lesegerät, das eine Schnittstelle zum Datenaustausch mit einem Dokument, das einem Nutzer zugeordnet ist, einen Prozessor und einen nicht-flüchtigen Datenspeicher enthält. Der besagte Datenspeicher beinhaltet Programminstruktionen, die von dem Prozessor ausgeführt werden können, und ein oder mehrere erste Parametermengen für die Durchführung eines Diffie-Hellman Protokolls zwischen dem Dokument und dem Lesegerät, wobei die Durchführung des Diffie-Hellman Protokolls nach einem Anforderungs-Antwort Chipkartenprotokoll erfolgt. Das Lesegerät ist bei Ausführung der Programminstruktionen ausgebildet zum:
- Empfang eines Chiffrats, das zumindest einen ersten Datenwert in verschlüsselter Form beinhaltet, vom Dokument;
- Entschlüsseln des Chiffrats;
- erste Durchführung des Diffie-Hellman-Protokolls zur Vereinbarung eines ersten gemeinsamen Geheimnisses zwischen dem Dokument und dem Lesegerät, wobei das Diffie-Hellman-Protokoll auf einer der ersten Parametermengen beruht;
- zweite Durchführung des Diffie-Hellman-Protokolls zur Vereinbarung eines zweiten gemeinsamen Geheimnisses zwischen dem Dokument und dem Lesegerät, wobei die zweite Durchführung des Diffie-Hellman-Protokolls auf einer zweiten Parametermenge beruht, wobei die zweite Parametermenge aus der ersten Parametermenge sowie dem ersten gemeinsamen Geheimnis und dem ersten Datenwert abgeleitet ist;
- Empfang eines Dokument-Authentisierungswertes vom Dokument, wobei in den Dokument-Authentisierungswert das zweite Geheimnis eingegangen ist;
- Authentifizierung des Dokuments durch das Lesegerät mit Hilfe des Dokument-Authentisierungswertes.

Nach Ausführungsformen der Erfindung ist das Lesegerät im Zuge der ersten Durchführung des Diffie-Hellman Protokolls ausgebildet zur:
- Erzeugung eines ersten privaten Lesegerät-Schlüssels und Berechnung eines ersten öffentlichen Lesegerät-Schlüssels, wobei die erste Parametermenge in die Berechnung des ersten öffentlichen Lesegerät-Schlüssels eingeht, und zum
- Senden des ersten öffentlichen Lesegerät-Schlüssels an das Dokument;

Das Lesegerät ist im Zuge der zweiten Durchführung des Diffie-Hellman Protokolls ausgebildet ist zum:
- lesegerätseitigen Berechnen der zweiten Parametermenge aus der ersten Parametermenge, wobei der erste Datenwert und das erste gemeinsame Geheimnis in die Berechnung der zweiten Parametermenge eingehen;
- Erzeugung eines zweiten privaten Lesegerät-Schlüssels und Berechnung eines zweiten öffentlichen Lesegerät-Schlüssels durch das Lesegerät, wobei die zweite Parametermenge in die Berechnung des zweiten öffentlichen Lesegerät-Schlüssels eingeht, und zum
- Senden des zweiten öffentlichen Lesegerät-Schlüssels vom Lesegerät an das Dokument.

Nach Ausführungsformen ist das Lesegerät zur Übertragung der ersten Parametermenge oder eines Auswahlsignals an das Dokument ausgebildet. Das Auswahlsignal ist zur Auswahl der ersten Parametermenge aus einer im Dokument gespeicherten Vielzahl an ersten Parametermengen geeignet, Im Zuge der Übertragung der ersten Parametermenge oder des Auswahlsignals wird auch der erste öffentliche Lesegerät-Schlüssel an das Dokument übertragen.

Nach Ausführungsformen beinhalten die Programminstruktionen erste und/oder zweite und/oder dritte Programminstruktionen. Bei Ausführung der ersten Programminstruktionen ist das Lesegerät ausgebildet für:
- die Erzeugung des ersten privaten Lesegerät-Schlüssel und die Berechnung des ersten öffentlichen Lesegerät-Schlüssels; und
- das Senden zumindest des ersten öffentlichen Lesegerät-Schlüssels als Bestandteil einer ersten CAPDU an das Dokument;

Die zweiten Programminstruktionen werden in Antwort auf den Erhalt einer ersten RAPDU ausgeführt. Die erste RAPDU wird vom Lesegerät in Antwort auf das Senden der ersten CAPDU empfangen, wobei die erste RAPDU das Chiffrat und den ersten öffentlichen Dokument-Schlüssel enthält;

Bei Ausführung der zweiten Programminstruktionen ist das Lesegerät ausgebildet für:
- die Entschlüsselung des Chiffrats;
- die Berechnung des ersten gemeinsamen Geheimnisses;
- die Berechnung der zweiten Parametermenge;
- die Erzeugung des zweiten privaten Lesegerät-Schlüssels und die Berechnung des zweiten öffentlichen Lesegerät-Schlüssels;
- das Senden des zweiten öffentlichen Lesegerät-Schlüssels als Bestandteil einer zweiten CAPDU an das Dokument.

Die dritten Programminstruktionen werden in Antwort auf den Erhalt einer zweiten RAPDU ausgeführt, wobei die zweite RAPDU vom Lesegerät in Antwort auf das Senden der zweiten CAPDU empfangen. Die zweite RAPDU enthält den zweiten öffentlichen Dokument-Schlüssel und den Dokument-Authentisierungswert.

Bei Ausführung der dritten Programminstruktionen ist das Lesegerät ausgebildet für:
- die Berechnung des zweiten gemeinsamen Geheimnisses;
- Überprüfung des Dokument-Authentisierungswertes unter Verwendung des zweiten gemeinsamen Geheimnisses.

Nach Ausführungsformen signalisiert das Lesegerät, z.B. mittels eines Displays oder einer Netzwerkschnittstelle zu einem anderen Datenverarbeitungssystem, dass der Nutzer eine Bestimmte Berechtigung besitzt bzw. zugewiesen bekommen soll, falls die Überprüfung ergibt, dass das das Dokument sich erfolgreich gegenüber dem Lesegerät authentisiert hat. Nach anderen Ausführungsformen ist zusätzlich zur erfolgreichen Authentisierung des Dokuments ferner erforderlich, dass ein oder mehrere zweite Datenwerte, die vom Dokument an das Lesegerät übermittelt wurden, ein oder mehrere Kriterien erfüllen, damit das besagte Signal emittiert wird.

Nach Ausführungsformen der Erfindung beinhalten die Programminstruktionen vierte Programminstruktionen. Bei Ausführung der vierten Programminstruktionen ist das Lesegerät ausgebildet für:
- eine Berechnung eines Lesegerät-Authentisierungswertes mit Hilfe des zweiten gemeinsamen Geheimnisses;
- Senden einer dritten CAPDU mit dem Lesegerät-Authentisierungswertes an das Dokument.

Vorzugsweise erfolgt die Berechnung des Lesegerät-Authentisierungswertes durch Anwenden einer Ableitungsfunktion (wie etwa Hash, Hmac, TIs) auf das zweite gemeinsame Geheimnis unter Rückgabe eines Ergebnisses, welches als kryptographischer Schlüssel dient. Der Lesegerät-Authentisierungswert ist das Ergebnis einer Anwendung einer MAC-Funktion unter Verwendung des besagten Ergebnisses.

Nach Ausführungsformen umfasst das Lesegerät ferner:
- eine zusätzlichen Schnittstelle zum Auslesen von Daten aus einem Datenträger des Dokuments;
- Mittel zur Extraktion eines in den Daten enthaltenen Codes;
- Verwendung des Codes als das Passwort zur Entschlüsselung des empfangenen Chiffrats.

Diese Merkmale können vorteilhaft sein, da eine manuelle Eingabe des Passworts in das Lesegerät zum Zwecke der Berechnung des geheimen Schlüssels zur Entschlüsselung des Chiffrats nicht mehr notwendig ist. Vielmehr wird das Passwort automatisch vom Dokument, z.B. mittels einer optischen Schnittstelle, erfasst.

Nach Ausführungsformen kann das Passwort zur Ableitung des geheimen Schlüssels, der zur Entschlüsselung des Chiffrats verwendet wird, dienen.

Nach Ausführungsformen handelt es sich bei der zusätzlichen Schnittstelle um:
- eine optische Schnittstelle geeignet zum Lesen von auf dem Dokument gedruckten Zeichenketten und/oder 2D Codes; oder
- eine optische Schnittstelle geeignet zum Empfang von Lichtsignalen oder Infrarotsignalen von ein oder mehreren Laserdioden des Dokuments; oder
- eine optische Schnittstelle beinhaltend eine OCR Funktionalität geeignet zum Lesen und decodieren eines Dokumentenaufdrucks beinhaltend eine MRZ oder CAN.

### Dokument

In einem weiteren Aspekt betrifft die Erfindung ein Dokument, das einem Nutzer zugeordnet ist, umfassend:
- eine Schnittstelle zum Datenaustausch mit einem Lesegerät;
- einen Prozessor;
- einen nicht-flüchtigen Datenspeicher mit von dem Prozessor ausführbaren Programminstruktionen für die Durchführung eines Diffie-Hellman Protokolls zwischen dem Dokument und dem Lesegerät, Die Durchführung des Diffie-Hellman Protokolls zwischen dem Dokument und dem Lesegerät erfolgt nach einem Anforderungs-Antwort Chipkartenprotokoll.

Bei Ausführung der Programminstruktionen ist das Dokument ausgebildet für:
- Erzeugung eines ersten Datenwertes;
- Berechnung eines Chiffrats aus zumindest dem ersten Datenwert mittels eines geheimen Schlüssels;
- Übertragung des Chiffrats an das Lesegerät;
- erste Durchführung des Diffie-Hellman-Protokolls zur Vereinbarung eines ersten gemeinsamen Geheimnisses zwischen dem Dokument und dem Lesegerät, wobei die erste Durchführung des Diffie-Hellman-Protokolls auf einer ersten Parametermenge beruht,
- zweite Durchführung des Diffie-Hellman-Protokolls zur Vereinbarung eines zweiten gemeinsamen Geheimnisses zwischen dem Dokument und dem Lesegerät, wobei die zweite Durchführung des Diffie-Hellman-Protokolls auf einer zweiten Parametermenge beruht, die aus der ersten Parametermenge sowie dem ersten gemeinsamen Geheimnis und dem ersten Datenwert abgeleitet ist, wobei die erste und zweite Durchführung des Diffie-Hellman Protokolls der Authentisierung des Dokuments gegenüber dem Lesegerät dienen;
- Berechnen eines Dokument-Authentisierungswertes aus dem zweiten gemeinsamen Geheimnis durch das Dokument;
- Übermittlung des Dokument-Authentisierungswertes vom Dokument an das Lesegerät.

Nach Ausführungsformen der Erfindung beinhaltet die erste Durchführung des Diffie-Hellman-Protokolls:
- Erzeugung eines ersten privaten Dokument-Schlüssels und Berechnung eines ersten öffentlichen Dokument-Schlüssels durch das Dokument, wobei die erste Parametermenge in die Berechnung des ersten öffentlichen Dokument-Schlüssels eingeht;
- Senden des ersten öffentlichen Dokument-Schlüssels an das Lesegerät.

Die zweite Durchführung des Diffie-Hellman-Protokolls beinhaltet:
- Berechnen der zweiten Parametermenge aus der ersten Parametermenge, wobei der erste Datenwert und das erste gemeinsame Geheimnis in die Berechnung der zweiten Parametermenge eingehen;
- Erzeugung eines zweiten privaten Dokument-Schlüssels und Berechnung eines zweiten öffentlichen Dokument-Schlüssels durch das Dokument, wobei die zweite Parametermenge in die Berechnung des zweiten öffentlichen Dokument-Schlüssel eingeht;
- Senden des zweiten öffentlichen Dokument-Schlüssels an das Lesegerät.

Nach Ausführungsformen der Erfindung umfasst das Dokument Mittel zur Bereitstellung der ersten Parametermenge für die dokumentseitige Durchführung des Diffie-Hellman Protokolls, wobei die besagten Mittel umfassen:
- den nicht-flüchtigen Speicher des Dokuments, in dem die erste Parametermenge gespeichert ist;
- den nicht-flüchtigen Speicher des Dokuments, in dem die erste Parametermenge als eine ausgewählte erste Parametermenge zusammen mit ein oder mehreren weiteren ersten Parametermengen in dem nicht-flüchtigen Speicher des Dokuments gespeichert ist; oder
- die Schnittstelle, wobei die Schnittstelle zum Empfang eines Auswahlsignals vom Lesegerät zur Auswahl der ersten Parametermenge aus einer Vielzahl von ersten Parametermengen, die in dem nicht-flüchtigen Speicher des Dokuments gespeichert sind, ausgebildet ist, wobei zusammen mit dem Auswahlsignal auch ein erster öffentlicher Lesegerät-Schlüssel vom Lesegerät durch das Dokument empfangen wird; oder
- die Schnittstelle, wobei die Schnittstelle zum Empfang der ersten Parametermenge vom Lesegerät ausgebildet ist, wobei zusammen mit der ersten Parametermengen auch der erste öffentliche Lesegerät-Schlüssel vom Lesegerät durch das Dokument empfangen wird.

Nach Ausführungsformen der Erfindung beinhalten die Programminstruktionen vierte und/oder fünfte Programminstruktionen. Die vierten Programminstruktionen werden in Antwort auf den Empfang einer ersten CAPDU, welche den ersten öffentlichen Lesegerät-Schlüssel enthält, ausgeführt. Das Dokument ist bei Ausführung der vierten Programminstruktionen ausgebildet für:
- die Erzeugung des ersten Datenwertes;
- die Berechnung des Chiffrats;
- die Erzeugung des ersten öffentlichen Dokument-Schlüssel und die Berechnung des ersten privaten Dokument-Schlüssel;
- das Senden des ersten öffentlichen Dokument-Schlüssels zusammen mit dem Chiffrat an das Lesegerät als Bestandteile einer ersten RAPDU im Zuge der ersten Ausführung des Diffie-Hellman Protokolls.

Die fünften Programminstruktionen werden in Antwort auf den Erhalt einer zweiten CAPDU ausgeführt. Die zweite CAPDU wird in Antwort auf das Senden der ersten RAPDU vom Dokument empfangen, wobei die zweite CAPDU einen zweiten öffentlichen Lesegerät-Schlüssel enthält. Das Dokument ist bei Ausführung der fünften Programminstruktionen ausgebildet für:
- die Berechnung des ersten gemeinsamen Geheimnisses;
- die Berechnung der zweiten Parametermenge;
- die Erzeugung des zweiten privaten Dokument-Schlüssels und die Berechnung des zweiten öffentlichen Dokument-Schlüssels;
- die Berechnung des zweiten gemeinsamen Geheimnisses;
- die Berechnung des Dokument-Authentisierungswertes;
- das Senden des dokumentseitigen Authentisierungswertes zusammen mit dem zweiten öffentlichen Schlüssel als Bestandteil einer zweiten RAPDU an das Lesegerät zur Durchführung der Authentisierung des Dokuments gegenüber dem Lesegerät.

Nach Ausführungsformen der Erfindung beinhaltet der nicht-flüchtige Speicher des Dokuments die erste Parametermenge oder eine Auswahl der ersten Parametermenge aus einer Vielzahl weiterer erster Parametermengen. Die Programminstruktionen beinhalten vierte und/oder fünfte und/oder sechste Programminstruktionen.

Die vierten Programminstruktionen werden im Zuge eines Boot-Vorgangs des Dokuments oder unmittelbar im Anschluss an den Boot-Vorgang ausgeführt. Bei Ausführung der vierten Programminstruktionen ist das Dokument ausgebildet für:
- die Erzeugung des ersten Datenwertes;
- die Berechnung des Chiffrats;
- die Erzeugung des ersten privaten Dokument-Schlüssels und die Berechnung des ersten öffentlichen Dokument-Schlüssels;
- eine Speicherung des Chiffrats und des ersten öffentlichen Dokument-Schlüssels in dem Dokument.

Die fünften Programminstruktionen werden in Antwort auf den Empfang einer ersten CAPDU enthaltend den ersten öffentlichen Lesegerät-Schlüssel ausgeführt. Bei Ausführung der fünften Programminstruktionen ist das Dokument ausgebildet für:
- unmittelbar in Antwort auf den Empfang der ersten CAPDU, Lesen des gespeicherten ersten öffentlichen Dokument-Schlüssels und des Chiffrats und Senden des gelesenen ersten öffentlichen Dokument-Schlüssels und des Chiffrats als Bestandteil einer ersten RAPDU an das Lesegerät.

Die Ausführung der fünften Programminstruktionen beinhaltet ferner die Ausführung der folgenden Programminstruktionen nach oder parallel zum Senden der ersten RAPDU:
- Lesen des gespeicherten ersten öffentlichen Dokument-Schlüssels und des Chiffrats;
- Berechnung des ersten gemeinsamen Geheimnisses;
- die dokumentseitige Berechnung der zweiten Parametermenge;
- die Erzeugung des zweiten privaten Dokument-Schlüssels und die Berechnung des zweiten öffentlichen Dokument-Schlüssels.

Die sechsten Programminstruktionen werden in Antwort auf den Erhalt einer zweiten CAPDU ausgeführt, wobei die zweite CAPDU in Antwort auf das Senden der ersten RAPDU vom Dokument empfangen wird. Die zweite CAPDU enthält den zweiten öffentlichen Lesegerät-Schlüssel. Bei Ausführung der sechsten Programminstruktionen ist das Dokument ausgebildet für:
- die Berechnung des zweiten gemeinsamen Geheimnisses;
- die Berechnen eines Dokument-Authentisierungswertes;
- die Übermittlung des Dokument-Authentisierungswertes an das Lesegerät, wobei der zweite öffentliche Dokument-Schlüssel vom Dokument an das Lesegerät zusammen mit dem Dokument-Authentisierungswert als Bestandteil einer zweiten RAPDU gesendet wird.

Nach Ausführungsformen der Erfindung beinhaltet das Dokument einen durch das Lesegerät auslesbaren Datenträger. Der Datenträger enthält das Passwort, das von dem Dokument bei der Berechnung des Chiffrats verwendet wird. Der Datenträger kann beispielsweise aus einem Aufdruck, einem mittels Funktechnik auslesbaren Datenspeicher oder aus ein oder mehreren elektronischen Anzeigeelementen bestehen.

In einem weiteren Aspekt betrifft die Erfindung ein Computerprogrammprodukt mit Computer-interpretierbaren Instruktionen zur Durchführung der Programminstruktionen nach einem der vorigen Ausführungsformen.

In einem weiteren Aspekt betrifft die Erfindung ein System umfassend ein oder mehrere Lesegeräte sowie ein oder mehrere Dokumente nach einem der vorigen Ausführungsformen.

Im Weiteren werden Ausführungsformen der Erfindung mit Bezugnahme auf die Zeichnungen näher erläutert. Es zeigen:
- Figur 1: ein Flussdiagramm eines Verfahrens zur Authentifizierung eines Dokuments gegenüber einem Lesegerät,
- Figur 2a: ein beschleunigtes Ablaufschema einer weiteren Ausführungsform des Authentifizierungsverfahrens,
- Figur 2b: das Ablaufschema nach 2a basierend auf ECDH,
- Figur 3a: ein noch stärker beschleunigtes Ablaufschema einer weiteren Ausführungsform des Authentifizierungsverfahrens,
- Figur 3b: das noch Ablaufschema nach 3a basierend auf ECDH,
- Figur 4: ein Blockdiagramm eines Lesegerätes und eines Dokuments, und
- Figur 5: ein Verfahren zur Generierung des Chiffrats.

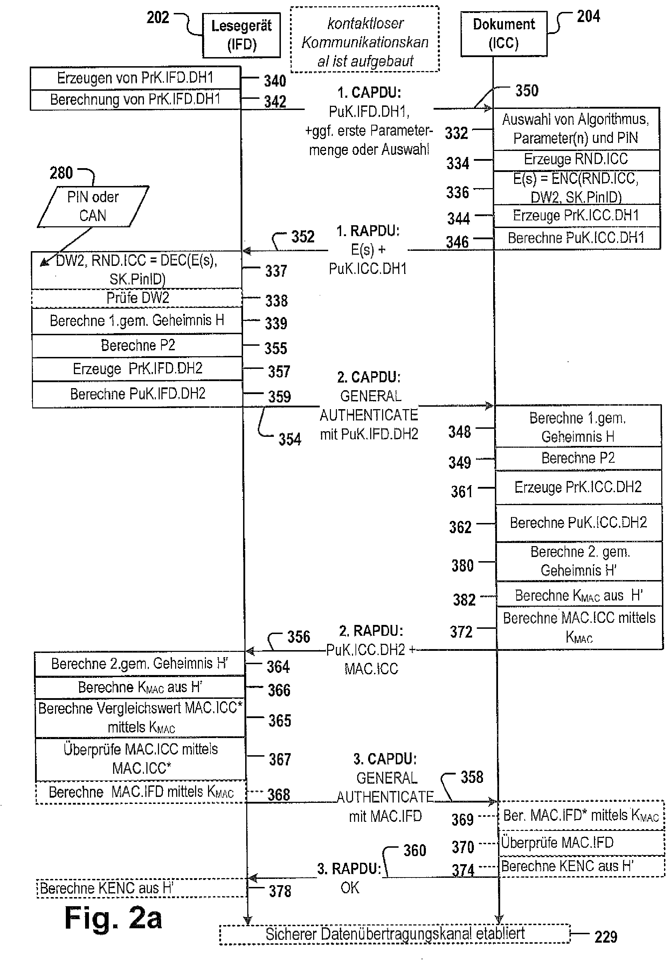

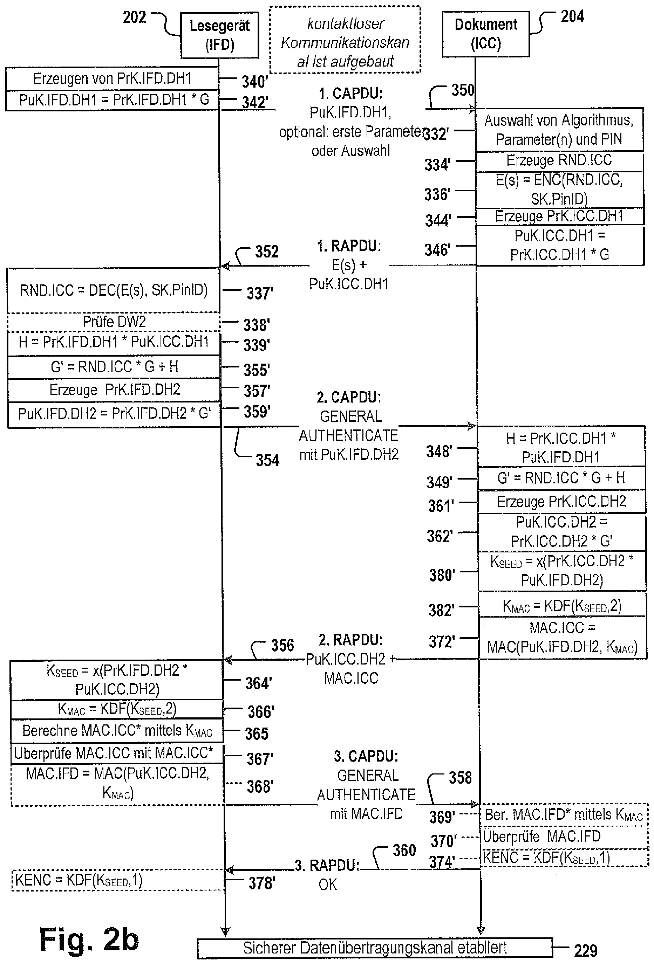

Im Weiteren werden einander entsprechende Elemente der nachfolgenden Ausführungsformen mit denselben Bezugszeichen gekennzeichnet. Berechnungsschritte der Figuren 2, 3 und 4, welche sich funktional entsprechen oder identisch sind, sind mit dreistelligen Referenznummern gekennzeichnet, welche sich hinsichtlich der ersten Ziffer unterscheiden, hinsichtlich der beiden letzten Ziffern jedoch identisch sind.

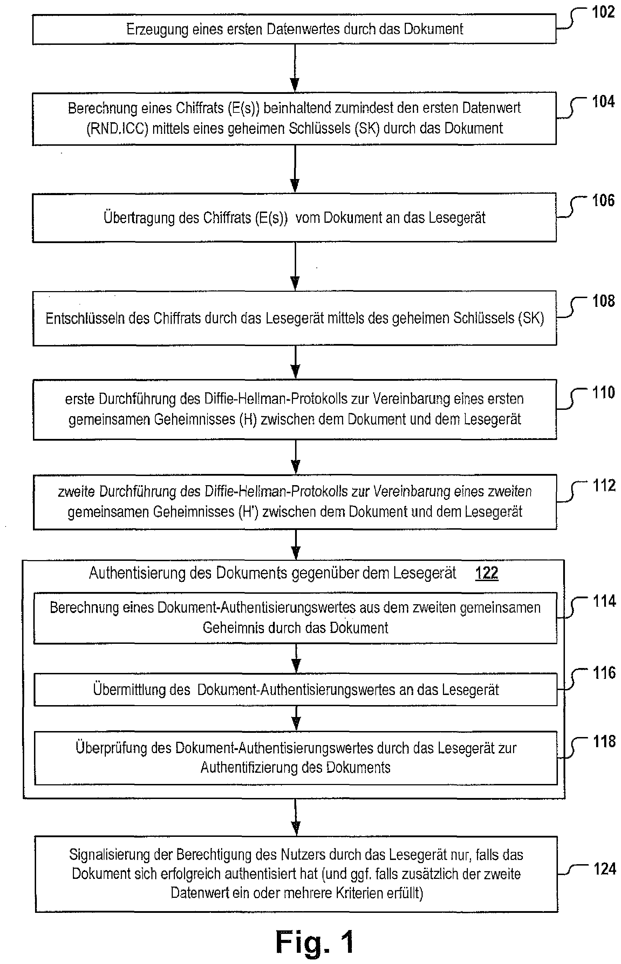

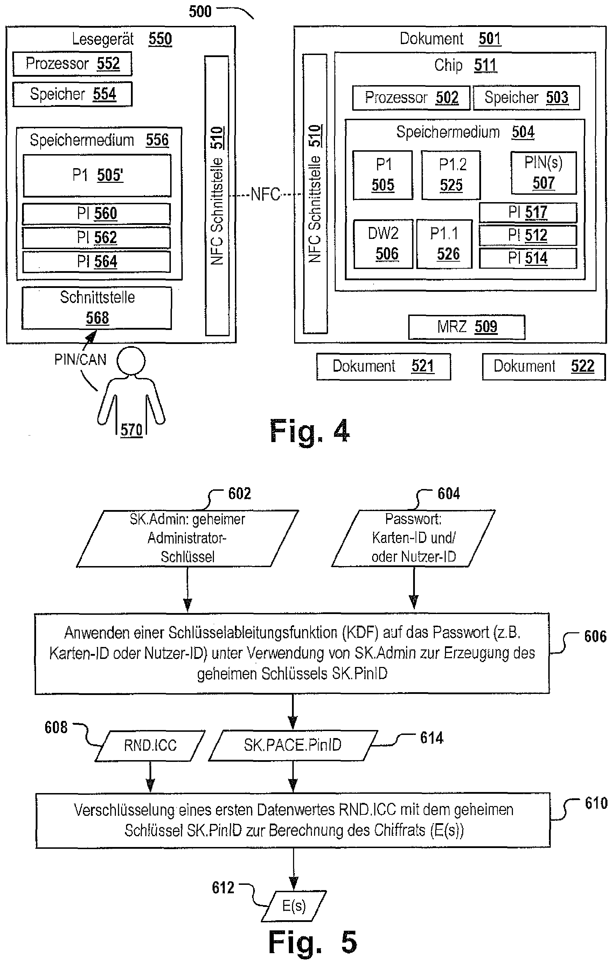

Die **Figur 1** zeigt ein Verfahren, das von einem Dokument und einem Lesegerät zusammen ausgeführt wird. In einem ersten Schritt 102 wird ein erster Datenwert RND.ICC durch das Dokument erzeugt. Bei diesem Datenwert kann es sich insbesondere um eine Zufallszahl handeln. In einem weiteren Schritt 104 berechnet das Dokument ein Chiffrat E(s) aus einem Datensatz s. Dieser Datensatz beinhaltet zumindest den ersten Datenwert RND.ICC, kann aber auch ein oder mehrere zweite Datenwerte beinhalten. Das Chiffrat wird mithilfe eines geheimen Schlüssels SK durch das Dokument berechnet. In diesem Schlüssels geht nach Ausführungsformen der Erfindung, wie sie etwa in Figur 5 beschrieben sind, ein Passwort 604 bestehend zum Beispiel aus einer Karten-ID oder eine Nutzer-ID ein. Außerdem kann ein Administratorschlüssel 602 bei der Generierung des geheimen Schlüssels SK verwendet werden. In Schritt 106 wird das berechnete Chiffrat vom Dokument an das Lesegerät übertragen. Das Lesegerät entschlüsselt das Chiffrat in Schritt 108 mit Hilfe des geheimen Schlüssels SK, welcher auch dem Lesegerät bekannt ist bzw. auch vom Lesegerät abgeleitet werden kann. Im Zuge der ersten Durchführung des Diffie-Hellman-Protokolls in Schritt 110 wird ein erstes gemeinsames Geheimnis H zwischen dem Dokument und dem Lesegerät vereinbart. Bei der zweiten Durchführung des Diffie-Hellman-Protokolls in Schritt 112 wird ein zweites gemeinsames Geheimnis H' zwischen dem Dokument und dem Lesegerät vereinbart. Schließlich authentifiziert sich das Dokument im Schritt 122 gegenüber dem Lesegerät mithilfe des zweiten Geheimnisses. Dies kann beispielsweise dadurch erfolgen, dass in einem Schritt 114 ein Dokument-Authentisierungswert aus dem zweiten gemeinsamen Geheimnis durch das Dokument berechnet wird. Der Dokument Authentisierungswert Leseschritt 116 vom Dokument an das Lesegerät übermittelt so dass das Lesegerät in Schritt 118 in die Lage versetzt wird, den Dokument-Authentisierungswert und damit die Identität des Dokuments bzw. die Identität des Nutzers des Dokumentes zu verifizieren. Im Falle einer erfolgreichen Authentisierung des Dokuments gegenüber dem Lesegerät erfolgt in Schritt 124 eine Signalisierung einer Berechtigung des Nutzers. Die Signalisierung kann in einem optischen Signal bestehen oder in einem Kommando, welches Software-oder Hardwarekomponenten zur Ausführung einer Funktion oder zur Freigabe von Daten oder geographischen Bereichen veranlasst. Nach manchen Ausführungsformen kann die Aussendung des Signals an weitere Bedingungen geknüpft sein, insbesondere daran, dass ein oder mehrere zweite Datenwerte, die zusammen mit dem ersten Datenwert vom Dokument an das Lesegerät übermittelt werden, ein oder mehrere Kriterien erfüllen.

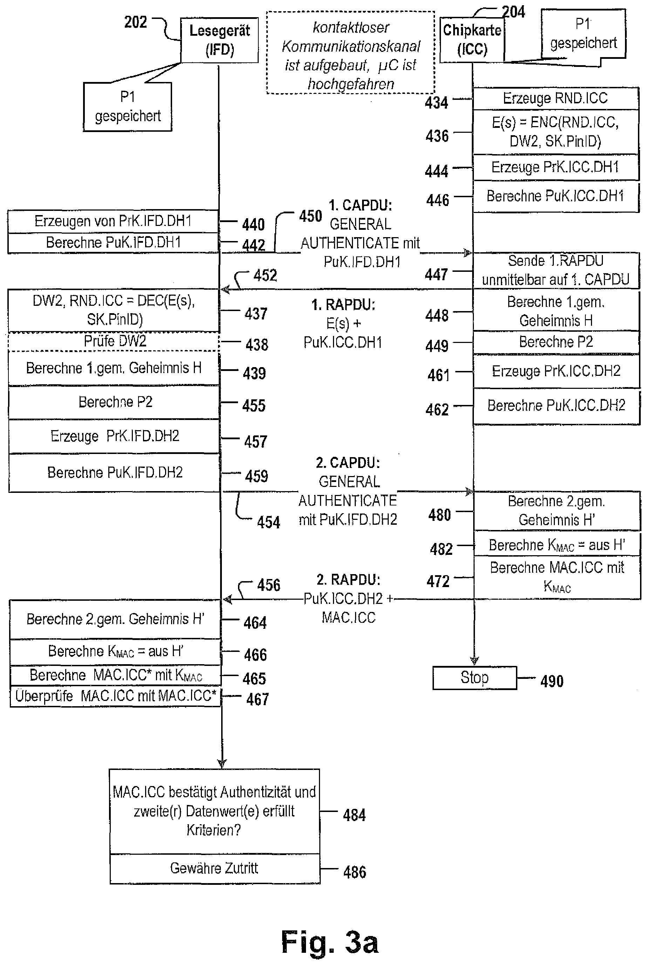

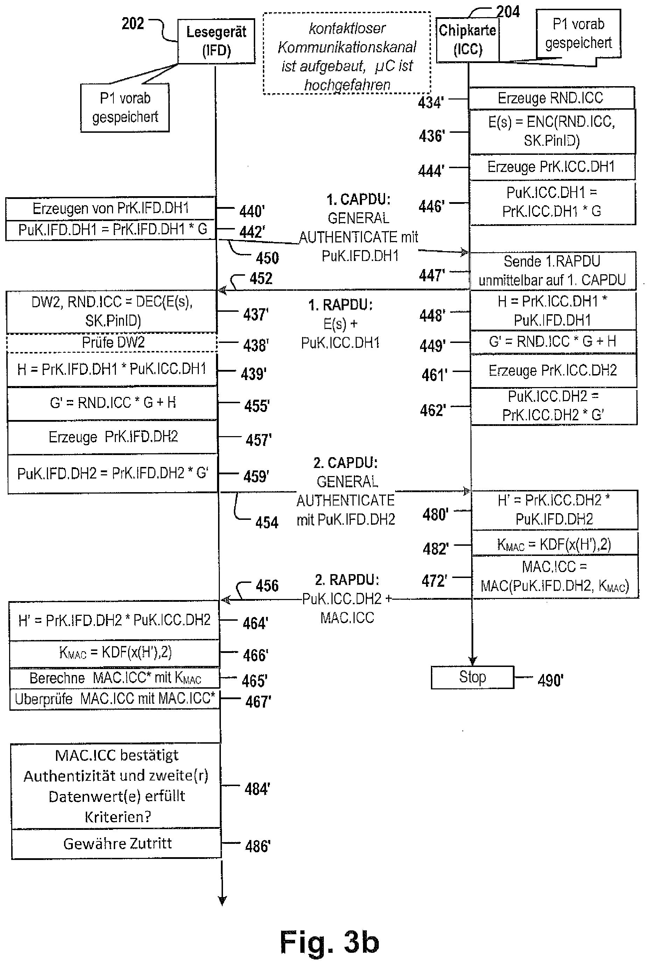

Die **Figuren 2-3** zeigen Ausführungsformen des Verfahrens, die eine effiziente Authentisierung des Dokuments gegenüber dem Lesegerät ermöglichen. Die Figuren 2a und 3a beziehen sich dabei auf das allgemeine Diffie-Hellman-Protokoll, die Figuren 2b und 3b beziehen sich auf Ausführungsformen, welche auf ECDH beruhen. Die unten stehende Tabelle soll die im Folgenden verwendeten Bezeichner näher erläutern.

| **Bezeichner** | **Funktion im allgemeinen Diffie-Hellman Protokoll** | **Funktion im ECDH** |
|---|---|---|
| PrK.IDF.DH1 | Erster geheimer ("Pr"-"private") Lesegerät-Schlüssel, der im Zuge der ersten DH-Protokolldurchführung durch das Lesegerät (IFD) generiert wird, und zur Erzeugung des PuK.IDF.DH1 dient | |
| PuK.IDF.DH1 | Erster öffentlicher ("Pu"-"public") Lesegerät-Schlüssel, der im Zuge der ersten DH-Protokolldurchführung durch das Lesegerät generiert wird, und der mit PrK.IDF.DH1 ein asymmetrisches kryptographisches Schlüsselpaar bildet | |
| PrK.ICC.DH1 | Erster geheimer Dokument-Schlüssel, der im Zuge der ersten DH-Protokolldurchführung durch das Dokument (ICC) generiert wird, und zur Erzeugung des PuK.ICC.DH1 dient | |
| PuK.ICC.DH1 | Erster öffentlicher Dokument-Schlüssel, der im Zuge der ersten DH-Protokolldurchführung durch das Dokument generiert wird, und der mit PrK.ICC.DH1 ein asymmetrisches kryptographisches Schlüsselpaar bildet. | |
| PrK.IDF.DH2, PuK.IDF.DH2, PrK.ICC.DH2, PuK.ICC.DH2 | Funktion analog zu PrK.IDF.DH1, PuK.IDF.DH1, PrK.ICC.DH1, PuK.ICC.DH1, jedoch jeweils für die zweite DH-Protokolldurchführung | |
| G | Generator, gehört zu der ersten Parametermenge, die Grundlage für die erste DH Protokolldurchführung ist | Basispunkt einer Kurve, die im ECDH verwendet wird |
| H | Erstes gemeinsames Geheimnis | Ein erster gemeinsamer Kurvenpunkt, der mittels ECDH aus der Kurve berechnet wird und als erstes gemeinsames Geheimnis dient |
| G' | Zwischenergebnis für die Berechnung des zweiten Geheimnisses | Temporärer Basispunkt der Kurve |
| H' | Zweites gemeinsames Geheimnis | Ein zweiter gemeinsamer Kurvenpunkt, der mittels ECDH aus der Kurve berechnet wird |
| KSEED | KSEED kann alternativ zu H' als zweites gemeinsames Geheimnis dienen. Wird nach manchen Ausführungsformen zum Aufbau des geschützten Datenübertragungskanals. | |
| KMAC | Schlüssel für die "message authentication code" (MAC) Berechnung. Ein Message Authentication Code (MAC) dient dazu, Gewissheit über den Ursprung von Daten oder Nachrichten zu erhalten und ihre Integrität zu überprüfen (siehe Menezes u.a., "Handbook of Applied Cryptography". S. 323). MAC-Algorithmen erfordern zwei Eingabeparameter, erstens die zu schützenden Daten (z.B. PuK.IFD.DH2 oder PuK.ICC.DH2) und zweitens einen geheimen Schlüssel (z.B. KMAC), und berechnen aus beidem eine Prüfsumme, den Message Authentication Code (MAC). | |
| | MACs basieren entweder auf Blockchiffren oder auf Hash-Funktionen oder sind speziell entwickelte MACs. Ein gebräuchliches Verfahren zur MAC-Berechnung, der HMAC, basiert auf kryptographischen Hash-Funktionen und wird beispielsweise in SSL und IPsec eingesetzt. Ein verbreitetes Verfahren basierend auf Blockchiffren ist der in der NIST Special Publication 800-38B spezifizierte Cipher-Based Message Authentication Code (CMAC), der in Verbindung mit AES oder Triple DES verwendet wird. Weitere MACs sind dem Fachmann bekannt. | |
| KDF | Bei der "key derivation function" (KDF") handelt es sich um eine Schlüsselableitungsfunktion, die z.B. zur Berechnung des KMAC aus dem KSEED eingesetzt werden kann. Mit Hilfe einer KDF ist es möglich, ein oder mehrere geheime Schlüssel aus einem geheimen Wert (z.B: einem Master-Schlüssel oder anderen bekannten Informationen wie z. B. ein Kennwort) mittels z.B. einer Pseudo-Random-Funktion abzuleiten. Die Pseudo-Random-Funktionen können z.B. schlüsselkryptographische Hash-Funktionen sein. | |
| MAC.ICC | Message Authentication Code (MAC), der dem Dokument (ICC) erlaubt, sich gegenüber dem Lesegerät zu authentisieren ("Dokument-Authentisierungswert"). Vorzugsweise geschieht dies dadurch, dass der vom Dokument berechnete Dokument-Authentisierungswert an das Lesegerät übertragen wird und dort mit einem lesegerätseitig errechneten Vergleichswert (MAC.ICC*) verglichen wird. Bei Gleichheit der verglichenen Werte hat das Dokument sich gegenüber dem Lesegerät erfolgreich authentisiert. | |
| MAC.IFD | MAC, der dem Lesegerät (IFD) erlaubt, sich gegenüber dem Dokument zu authentisieren ("Lesegerät-Authentisierungswert"). Vorzugsweise geschieht dies dadurch, dass der vom Lesegerät berechnete Lesegerät -Authentisierungswert an das Dokument übertragen wird und dort mit einem dokumentseitig errechneten Vergleichswert (MAC.IFD*) verglichen wird. Bei Gleichheit der verglichenen Werte hat das Lesegerät sich gegenüber dem Dokument erfolgreich authentisiert. | |

**Figur 2a** zeigt ein Verfahren zur Authentisierung eines Dokumentes gegenüber einem Lesegerät mit Hilfe des Diffie-Hellman-Protokolls (DH). Das Dokument 204 beinhaltet eine Chipkarte ("integrated circuit - ICC) und führt die auf der rechten Seite des Ablaufschemas dargestellten Schritte aus, das Lesegerät 202 ("Chip Card Interface Device" - IFD) führt die auf der linken Seite dargestellten Schritte aus. Figur 2b beschreibt eine Ausführungsform, welche auf der Verwendung des ECDH beruht. Da sich die Schritte bei beiden Ausführungsformen weitgehend entsprechen, sollen diese im Folgenden zusammen beschrieben werden. Sofern nicht anders dargestellt, beziehen sich Beschreibungen von Schritten der Figur 2a auch auf die jeweils analogen Schritte in Figur 2b.

Vorzugsweise haben das Lesegerät 202 und das Dokument 204 bereits einen kontaktlosen Kommunikationskanal aufgebaut, zum Beispiel mit Hilfe einer NFC-Schnittstelle 510, über welche CAPDUs und RAPDUs ausgetauscht werden können.

Da das Lesegerät die erste Parametermenge bereits gespeichert hat, die unter anderem auch ein Generatorelement beinhaltet, kann das Lesegerät automatisch oder auf Veranlassung eines Nutzers des Lesegerätes den ersten privaten Lesegerät-schlüssel PrK.IFD.DH1 in Schritt 340, zum Beispiel in Form einer Zufallszahl, erzeugen. In Schritt 342 errechnet das Lesegerät den ersten öffentlichen Lesegerät-Schlüssel unter Verwendung des Generatorelements und des ersten geheimen Lesegerät-Schlüssels. Dies kann zum Beispiel durch Multiplikation des ersten privaten Lesegerät-Schlüssels mit dem Generatorelement G erfolgen wie in Schritt 342' dargestellt. Das Generatorelement G kann beim ECDH die Funktion eines Basispunktes der Kurve einnehmen. Der erste öffentliche Lesegerätschlüssel wird als Bestandteil einer ersten CAPDU 350 an das Dokument gesendet. Falls in dem Dokument bereits die erste Parametermenge bzw. deren Auswahl gespeichert ist, ist es nicht erforderlich, die erste Parametermenge bzw. deren Auswahl zusammen mit dem ersten öffentlichen Lesegerätschlüssel zu übermitteln. Falls dies nicht der Fall ist, wird die erste Parametermenge bzw. deren Auswahl als Bestandteil der ersten CAPDU übermittelt. Gegebenenfalls können auch weitere Auswahlparameter übermittelt werden, zum Beispiel zur Auswahl des zu verwendenden kryptographischen Algorithmus, sofern die Auswahlparameter nicht bereits in Dokument gespeichert sind.

Sofern, wie in Figur 2a dargestellt, die erste Parametermenge bzw. deren Auswahl sowie ggf. die weiteren Auswahlparameter erst mit der ersten CAPDU übermittelt werden, erfolgt in Schritt 332 die Auswahl der zu verwendenden Algorithmen, Parameter und Passwörter in Antwort auf den Erhalt der ersten CAPDU 350. Die Schritte 332, 334, 336, 344 und 346 werden vorzugsweise als Block in Antwort auf den Erhalt der ersten CAPDU ausgeführt. In Schritt 334 wird ein erster Datenwert RND.ICC zum Beispiel als Zufallszahl generiert und in Schritt 332, gegebenenfalls in Kombination mit ein oder mehreren zweiten Datenwerten DW2, mit einem geheimen Schlüssel SK verschlüsselt. Dabei wird das Chiffrat (E(s)) gebildet. Vorzugsweise wird der geheime Schlüssel SK unter Verwendung eines Passwortes, zum Beispiel einer PIN, die in dem Dokument gespeichert ist, generiert, weshalb der geheime Schlüssel SK in Figuren 2 und 3 auch als SK.PinID bezeichnet wird. Außerdem wird in Schritten 344 und 346 generiert. Dies geschieht unter Verwendung des gleichen Parameterwertes G, welche auch schon vom Lesegerät zur Berechnung des ersten öffentlichen Lesegerät-Schlüssels verwendet wurde. Der erste öffentliche Dokument-Schlüssel wird zusammen mit dem Chiffrat als Bestandteil einer ersten RAPDU 352 zum Lesegerät gesendet. Das Lesegerät führt nach Erhalt der ersten RAPDU die Schritte 337, 338, 339, 355, 357, und 359 vorzugsweise als Block in Antwort auf den Erhalt der ersten RAPDU durch. In Schritt 337 wird das empfangene Chiffrat entschlüsselt, so dass der erste und gegebenenfalls auch die ein oder mehreren zweiten Datenwerte in entschlüsselter Form vorliegen. Zur Entschlüsselung wird der geheime Schlüssel SK verwendet. Der geheime Schlüssel SK ist nach Ausführungsformen ein Derivat eines Passwortes 604 und gegebenenfalls eines weiteren Schlüssels 602. Sowohl das Lesegerät als auch das Dokument verwenden also den gleichen geheimen Schlüssel SK. In Schritt 338 werden die ein oder mehreren zweiten Datenwerte mit ein oder mehreren Kriterien verglichen. Obwohl dieser Vergleich auch an späterer Stelle stattfinden kann, wird der Schritt 338 vorzugsweise unmittelbar im Anschluss an Schritt 337 ausgeführt. Dies ist vorteilhaft, denn wenn die Prüfung der zweiten Datenwerte, die in der Regel schnell ausgeführt werden kann, ergibt, dass dem Nutzer bestimmte Berechtigungen nicht zugesprochen werden sollen, kann das ganze Verfahren an dieser Stelle abgebrochen werden. Je früher also Schritt 338 durchgeführt wird, desto höher die Zeitersparnis im Falle fehlender Berechtigung. In Schritt 339 wird das erste gemeinsame Geheimnis H berechnet. Dies kann zum Beispiel durch Multiplikation des ersten öffentlichen Lesegerät-Schlüssels mit dem ersten öffentlichen Dokument-Schlüssel geschehen. Bei dem ersten gemeinsamen Geheimnis kann es sich um einen Kurvenpunkt einer Kurve, die die Basis für das in Figur 2b beschriebene ECDH darstellt, handeln. In Schritt 355 wird die zweite Parametermenge P2 berechnet, welche die Basis für die Durchführung des zweiten Diffie-Hellman-Protokolls darstellt. Die zweite Parametermenge kann beispielsweise aus einem Parameterwert G' bestehen welcher beispielsweise dadurch berechnet wird, dass der erste Datenwert RND.ICC mit dem ersten gemeinsamen Geheimnis G multipliziert wird und das Produkt dieser Multiplikation mit dem ersten gemeinsamen Geheimnis H addiert wird. Bei dem G' kann es sich beim ECDH um einen temporären Basispunkt der Kurve handeln. In Schritt 357 wird der zweite geheime Lesegerät-Schlüssel erzeugt, zum Beispiel in der Form einer weiteren Zufallszahl. In Schritt 359 wird unter Verwendung des zweiten geheimen Lesegerät-Schlüssels PrK.IFD.DH2 der zweite öffentliche Lesegerät-Schlüssel PuK.IFD.DH2 berechnet. Dies kann beispielsweise dadurch erfolgen, dass der zweite private Lesegerät-Schlüssel mit zumindest einem Parameterwert G' der zweiten Parametermenge P2 multipliziert wird. Das Resultat der Berechnungsschritte 337, 339, 355, 357 und 359, der zweite öffentliche Lesegerät-Schlüssel PuK.IFD.DH2 wird als Bestandteil einer zweiten CAPDU an das Dokument gesendet. Die zweite CAPDU kann beispielsweise mithilfe der Methoden-Schnittstelle "GENERAL AUTHENTICATE", die von vielen heute verwendeten Dokumenten unterstützt wird, erfolgen.

In Antwort auf den Erhalt der zweiten CAPDU führt das Dokument 204 die Schritte 348, 349, 361, 362, 380, 382 und 372 vorzugsweise im Block aus. Schritt 348 beinhaltet die dokumentseitige Berechnung des ersten gemeinsamen Geheimnisses H. Dies kann beispielsweise dadurch erfolgen, dass der erste öffentliche Dokumentschlüssel mit dem ersten öffentlichen Lesegerät-Schlüssel multipliziert wird. In Schritt 349 wird dokumentseitig die zweite Parametermenge P2 berechnet. Dies geschieht in analoger Weise zu Schritt 355. Falls also der Parameterwert G der zweiten Parametermenge P2 durch das Lesegerät dadurch berechnet wurde, dass der erste Datenwert mit dem Parameterwert G multipliziert und mit dem ersten gemeinsamen Geheimnis H addiert wurde, so werden die gleichen Berechnungen auch in Schritt 349 durchgeführt. Der zweite geheime Dokument-Schlüssel PrK.ICC.DH2 wird in Schritt 361 generiert, zum Beispiel als Zufallszahl, und in Schritt 362 verwendet, um zusammen mit zumindest einem Wert G' aus der zweiten Parametermenge P2 den zweiten öffentlichen Dokument-Schlüssels PuK.ICC.DH2 zu berechnen. In Schritt 380 berechnet das Dokument das zweite gemeinsame Geheimnis H' vorzugsweise unter Verwendung des zweiten öffentlichen Lesegerät-Schlüssels und des zweiten öffentlichen Dokument-Schlüssels. Im Falle des ECDH kann das zweite gemeinsame Geheimnis H' beispielsweise als X-Koordinate einer durch den zweiten öffentlichen Lesegerät-Schlüssel und den zweiten öffentlichen Dokument-Schlüssel bestimmten Kurve abgeleitet werden. In Schritt 382 leitet das Dokument einen weiteren Schlüssel K_{MAC} ab. Dies kann bei ECDH beispielsweise durch die Anwendung einer Schlüssel-Ableitungsfunktion KDF erfolgen, welche auf das zweite gemeinsame Geheimnis K_{SEED} und einen weiteren Wert (,2'), der beispielsweise durch einen der Auswahlparameter bestimmt sein kann, angewendet wird. In Schritt 372 berechnet das Dokument den Dokument-Authentisierungswert MAC.ICC. Vorzugsweise geschieht dies dadurch, dass der Schlüssel K_{MAC} als Schlüssel einer so genannten MAC-Berechnung zum Einsatz kommt und auf den zweiten öffentlichen Lesegerät-Schlüssel angewandt wird. Das Ergebnis dieser MAC-Berechnung ist der Dokument-Authentisierungswert MAC.ICC. Dieser wird als Bestandteil einer zweiten RAPDU 256 zusammen mit dem zweiten öffentlichen Dokument-Schlüssel vom Dokument an das Lesegerät übermittelt.

Das Lesegerät führt die Schritte 364, 366, 365 und 367 vorzugsweise als Block in Antwort auf den Erhalt der zweiten RAPDU 356 aus. Gemäß manchen Ausführungsformen, bei welchen sich zudem auch das Lesegerät bei dem Dokument authentifiziert, beinhaltet der besagte Block auch Schritt 368, in welchem einem Lesegerät-Authentisierungswert MAC.IFD berechnet wird. In Schritt 364 wird das zweite gemeinsame Geheimnis H' durch das Lesegerät berechnet. Dies geschieht in Analogie zu Schritt 380. So kann im Fall des ECDH das zweite gemeinsame Geheimnis als X-Koordinate einer Kurve, die durch den zweiten öffentlichen Lesegerätschlüssel und den zweiten öffentlichen Dokument-Schlüssel bestimmt ist, berechnet werden. Alternative Ausführungsformen, etwa die Verwendung einer Y-Koordinate anstatt einer X-Koordinate, sind für den Fachmann naheliegend und werden von Ausführungsformen der Erfindung umfasst. In Schritt 366 wird nun auch lesegerätseitig der Schlüssel K_{MAC} in Abhängigkeit von dem zweiten gemeinsamen Geheimnis berechnet. Dies geschieht in Analogie zu Schritt 382 durch Anwendung einer schon in Schritt 382 verwendeten Schlüssel-Ableitung KDF und eines entsprechenden weiteren Datenwertes ,2'. Der Schlüssel K_{MAC} wird in Schritt 365 verwendet um einen Vergleichswert MAC.ICC* zu berechnen, der mit dem empfangenen Dokument-Authentisierungswert MAC.ICC in Schritt 367 verglichen wird um die Authentizität des Dokuments zu überprüfen. Falls der durch das Lesegerät empfangene Dokument-Authentifizierung des Wert MAC.ICC mit dem Vergleichswert MAC.ICC* übereinstimmt, hat sich das Dokument erfolgreich gegenüber dem Lesegerät authentisiert.

Ausführungsformen, welche lediglich der Authentisierung des Dokuments gegenüber dem Lesegerät dienen, brechen an dieser Stelle das Verfahren ab.

Gemäß anderer Ausführungsformen, bei welchen vorgesehen ist, dass auch das Lesegerät sich gegenüber dem Dokument authentifiziert, beinhaltet der besagte Block auch die Ausführung des Schritts 368, in welchen ein Lesegerät-Authentisierungswert MAC. IFD berechnet wird. Dies kann beispielsweise dadurch geschehen, dass eine MAC-Berechnung auf den zweiten öffentlichen Dokument-Schlüssels PuK.ICC.DH2 angewandt wird. Die MAC-Berechnung verwendet dabei den in Schritt 366 berechneten Schlüssel K_{MAC}. Der Lesegerät-Authentisierungswert MAC.IFD kann nun als Bestandteil einer dritten CAPDU 358 an das Dokument gesendet werden. Das Dokument führt in Antwort auf den Empfang der dritten CAPDU die Schritte 369, 370 und optional auch 374 aus. In Schritt 369 berechnet das Dokument einen Vergleichswert MAC.IFD* für den Lesegerät-Authentisierungswert MAC.IFD. Dieser Vergleichswert wird im darauf folgenden Schritt 370 mit dem empfangenen Lesegerät-Authentisierungswert verglichen. Bei Übereinstimmung der beiden verglichenen Werte hat sich das Lesegerät erfolgreich gegenüber dem Dokument authentifiziert. In Schritt 374 berechnet das Dokument einen Sitzungsschlüssel K_{ENC}, zum Beispiel durch Anwendung einer Schlüssel-Ableitungsfunktion KDF auf das zweite gemeinsame Geheimnis und gegebenenfalls einen weiteren Parameterwert ,1'. Das Dokument sendet eine dritte RAPDU an das Lesegerät um diesen zu signalisieren, dass die Authentisierung des Lesegeräts erfolgreich war und mit dem Aufbau eines sicheren Datenübertragungskanals 229 begonnen werden kann. In Antwort auf den Empfang der dritten CAPDU berechnet das Lesegerät in Schritt 378 in analoger Weise zu 374 dem Sitzungsschlüssel K_{ENC}. Mithilfe des nun auf beiden Seiten bekannten Sitzungsschlüssels K_{ENC} wird der sicheren Datenübertragungskanal 229 aufgebaut, so dass nun Daten zwischen Dokument und Lesegerät ausgetauscht werden können, die von Dritten nicht durch Abführung der Kommunikation in Erfahrung gebracht werden können.

**Figuren 3a** **und** **3b** stellen Ablaufschemata von Ausführungsform der Erfindung dar, welche eine noch schnelle Authentisierung des Dokuments gegenüber dem Lesegerät. Figur 3b bezieht sich dabei auf eine Ausführungsform, deren Diffie-Hellman Protokoll auf ECDH basiert. In analoger Weise zu den Figuren 2a und 2b sollen die Figuren 3a und 3b im Folgenden gemeinsam beschrieben werden, wobei ggf. auf Besonderheiten des ECDH eingegangen wird. Bei den Schritten in 3a und 3b, die sich nur durch einen "'" voneinander unterscheiden handelt es sich um analoge, funktional äquivalente Schritte.

Bei den in Figuren 3a und 3b dargestellten Ausführungsformen handelt es sich um besonders schnelle Ausführungsvarianten. Die hohe Geschwindigkeit wird unter anderem dadurch ermöglicht, dass das Dokument bereits die erste Parametermenge P1 und alle erforderlichen Auswahlparameter im Dokument gespeichert hat und während bzw. unmittelbar im Anschluss an den Bootvorgang des Dokuments bereits einige Schritte 434, 436, 444 und 446 ausführt. Dies hat zur Folge, dass das Dokument unmittelbar im Anschluss auf den Erhalt einer ersten CAPDU die erste RAPDU, die das Chiffrat und den ersten öffentlichen Dokument-Schlüssel beinhaltet, praktisch ohne Zeitverzögerung an das Lesegerät in Schritt 447 senden kann.

Zunächst führt das Lesegerät 202 die Schritte 440 und 442 in analoger Weise aus, wie bereits für die in Figuren 2a und 2b dargestellten Ausführungsformen beschrieben. Der berechnete erste öffentliche Lesegerät-Schlüssel PuK.IFD.DH1 wird als Bestandteil einer ersten CAPDU vom Lesegerät an das Dokument gesendet.

Typischerweise werden die Schritte 434, 436, 444 und 446 als Block vor Erhalt der ersten CAPDU 450 ausgeführt. Da der besagte Block während bzw. unmittelbar im Anschluss an den Bootvorgang der Chipkarte 204 ausgeführt werden und die erste CAPDU vom Dokument erst empfangen werden kann, wenn die Chipkarte hochgefahren und der kontaktlose Kommunikationskanal aufgebaut ist, ist in der Regel sichergestellt, dass der erste öffentliche Dokument-Schlüssel und das Chiffrat schon berechnet wurde, wenn die erste CAPDU empfangen wird. Für den Fall, dass die erste CAPDU vom Dokument empfangen wird, bevor die Berechnung von 446 abgeschlossen ist, wird der besagte Block zunächst zu Ende berechnet, und unmittelbar im Anschluss daran die erste RAPDU in Schritt 447 gesendet. Der Block 434, 436, 444 und 446 beinhaltet, dass ein erster Datenwert RND.ICC, zum Beispiel als Zufallszahl, durch das Dokument generiert wird. In Schritt 436 berechnet das Dokument ein Chiffrat (E(s)) aus einem Datensatz s. Der Datensatz beinhaltet zumindest den ersten Datenwert, kann aber auch ein oder mehrere zweite Datenwerte DW2 beinhalten. Das Chiffrat wird mithilfe eines geheimen Schlüssels SK berechnet, in welchen ein Passwort, zum Beispiel eine PIN oder eine CAN eingeht. Gegebenenfalls kann ein Administratorschlüssel zur Erzeugung des geheimen Schlüssels SK verwendet werden. In Schritt 444 erzeugt das Dokument dem ersten geheimen Dokument-Schlüssel, zum Beispiel in Form einer weiteren Zufallszahl. Der erste geheime Dokument-Schlüssel wird in Schritt 446 verwendet, um einen zugehörigen ersten öffentlichen Dokument-Schlüssel, der mit dem ersten privaten Dokument-Schlüssel ein asymmetrisches kryptographisches Schlüsselpaar bildet, zu generieren. Beispielsweise kann ein Generatorelement G der ersten Parametermenge P1 bzw. im Falle von ECDH ein Basispunkt G der verwendeten Kurve, mit dem ersten privaten Dokument-Schlüssel multipliziert werden um den ersten öffentlichen Dokument-Schlüssel PuK.ICC.DH1 zu berechnen. Das heißt, der erste öffentliche Dokument-Schlüssel und das Chiffrat liegen in der Regel bereits im Dokument in gespeicherter Form vor, wenn das Dokument eine erste CAPDU vom Lesegerät erhält. Es ist also kein weiterer kryptographischer Berechnungsschritt notwendig, um eine erste RAPDU 452, die das Chiffrat und den ersten öffentlichen Dokument-Schlüssel enthält, in Antwort an den Empfang einer ersten CAPDU 450, an das Lesegerät zu senden, da sowohl Chiffrat als auch PuK.ICC.DH1 bereits in vorberechnetes Form vorliegen.

Das Lesegerät führt in Antwort auf den Empfang der ersten RAPDU 452 die Schritte 437, 438, 439, 455, 457 und 459 vorzugsweise als Block durch. In Schritt 438 erfolgt dabei nur bei Ausführungsformen, welche zusätzlich zur Authentisierung des Dokumentes mithilfe des ersten Datenwertes noch eine Überprüfung von ein oder zwei zweiten Datenwerten anhand von ein oder mehreren Kriterien vorsehen. In Schritt 439 wird das erste gemeinsame Geheimnis durch das Lesegerät, beispielsweise als Produkt des ersten öffentlichen Dokument-Schlüssels und des ersten öffentlichen Lesegerät-Schlüssels, berechnet. Schritt 455 beinhaltet die Berechnung der zweiten Parametermenge P2. In Schritt 457 wird der zweite private Lesegerät-Schlüssel zum Beispiel als weitere Zufallszahl von dem Lesegerät erzeugt und in Schritt 459 zur Berechnung des zweiten öffentlichen Lesegerät-Schlüssels PuK.IFD.DH2 herangezogen. In diese Berechnung geht auch die zweite Parametermenge P2 ein. So wird in der in Figur 3b beschriebenen Ausführungsform der zweite öffentliche Lesegerät-Schlüssel als das Produkt des ersten privaten Lesegerät-Schlüssels und eines temporären Basispunkts G' der Kurve, der Bestandteil der zweiten Parametermenge P2 ist, errechnet.

Der zweite öffentliche Lesegerätschlüssel wird als Bestandteil einer zweiten CAPDU 454 an das Dokument gesendet. Das Dokument führt in Antwort auf den Erhalt der zweiten RAPDU die Schritte 480, 482 und 472 vorzugsweise als Block durch. In Schritt 480 berechnet das Dokument das zweite gemeinsame Geheimnis H', zum Beispiel als Produkt des zweiten privaten Dokument-Schlüssels und des zweiten öffentlichen Lesegerät-Schlüssels. Das zweite gemeinsame Geheimnis wird in Schritt 482 zur Berechnung eines Schlüssels K_{MAC} verwendet, welche zur Ableitung des Dokument-Authentisierungswertes MAC.ICC mithilfe einer MAC-Berechnung in Schritt 472 dienen soll.

Der Dokument-Authentisierungswert MAC.ICC wird zusammen mit dem zweiten öffentlichen Dokument-Schlüssel PuK.ICC.DH2 als Bestandteil einer zweiten RAPDU 456 vom Dokument an das Lesegerät gesendet. In Antwort auf den Erhalt der zweiten RAPDU führt das Lesegerät die Schritte 464, 466, 465 und 467 vorzugsweise als Block durch. Der Schritt 464 beinhaltet die Berechnung des zweiten gemeinsamen Geheimnisses in gleicher Weise wie Schritt 480. Schritt 466 beinhaltet die Berechnung des Schlüssels K_{MAC} in gleicher Weise wie in Schritt 482 durchgeführt. In Schritt 465 berechnet das Lesegerät einen Vergleichswert MAC.ICC* . Der Vergleichswert wird in Schritt 467 mit dem empfangenen Dokument-Authentisierungswert verglichen um zu überprüfen, ob die beiden Werte identisch sind. Ist dies der Fall, hat sich das Dokument erfolgreich gegenüber dem Lesegerät authentisiert. Gegebenenfalls kann nach weiteren Ausführungsformen in Schritt 484 überprüft werden, ob sich das Dokument erfolgreich authentisiert hat und zudem die gegebenenfalls empfangenen zweiten Datenwerte DW2 die in Schritt 438 geprüften Kriterien erfüllen. Ist beides der Fall, so wird in Schritt 486 durch das Lesegerät den Dokument und/oder dem Nutzer 570 des Dokuments eine bestimmte Berechtigung eingeräumt. Die Berechtigung kann beispielsweise darin bestehen, dass dem Nutzer Zutritt zu einem bestimmten Raum, zu einem bestimmten Gebäude oder einem bestimmten Gebiet gewährt wird oder dass der Nutzer bzw. das Dokument auf geschützte Daten zugreifen kann.

Nach der in Figur 3 dargestellten Ausführungsform bricht das Verfahren Dokumentseitig nach dem Versand der zweiten RAPDU und lesegerätseitig nach der Durchführung von Schritt 484 ab, da weder der Aufbau eines sicheren Datenübertragungskanals 229 noch eine Authentisierung des Lesegeräts am Dokument vorgesehen sind. Der Aufbau des sicheren Datenübertragungskanals und/oder die Authentisierung des Lesegerätes gegenüber dem Dokument können jedoch nach anderen Ausführungsformen in analoger Weise wie in Figur 2 beschrieben durchgeführt werden.

**Figur 4** zeigt ein Blockdiagramm eines Systems 500, welches ein Lesegerät 550 und zumindest ein Dokument 501 beinhaltet. Das Lesegerät 550 verfügt über einen Arbeitsspeicher 554, einen Prozessor 552 sowie ein nicht-flüchtiges Speichermedium 556, auf welchem eine erste Parametermenge P1 gespeichert ist. Zudem sind auf dem Speichermedium erste Programminstruktionen 560, zweite Programminstruktionen 562 und dritte Programminstruktionen 564 gespeichert.

Die ersten Programminstruktionen 560 beinhalten vorzugsweise die Ausführung der Schritte 340 und 342 bzw. 440 und 442 bzw. der analogen ECDH-Schritte.

Die zweiten Programminstruktionen 562 beinhalten vorzugsweise die Schritte 337, 338, 339, 355, 357 und 359 bzw. 437, 438, 439, 455, 457 und 459 bzw. der analogen ECDH-Schritte.

Die dritten Programminstruktionen 564 beinhalten vorzugsweise die Schritte 364, 366, 365, 367 und 368 bzw. 464, 466, 465 und 467 bzw. der analogen ECDH-Schritte.

Das Lesegerät verfügt ferner über eine weitere Schnittstelle 568, die es dem Nutzer erlaubt, ein Passwort, zum Beispiel eine PIN einzugeben. Bei der Schnittstelle 568 kann es sich zum Beispiel um eine Tastatur, um ein Touchscreen, eine graphische Benutzeroberfläche in Kombination mit Tastatur oder Maus, oder ähnlichem handeln. Alternativ oder zusätzlich kann die Schnittstelle 568 auch zum automatischen Einlesen des Passwords, z.B. in Form einer CAN, ausgebildet sein. Beispielsweise kann die Schnittstelle 568 also Barcode-Lesegerät ausgebildet sein, oder als Kamera in Kombination mit einem auf dem Prozessor 552 ausgeführten OCR Modul, die einen Aufdruck 509 auf dem Dokument optisch erfasst und eine darin codierte CAN automatisch erkennt.

Dokument 501 beinhaltet einen Chip 511 mit einem Prozessor 502 und Arbeitsspeicher 503. Auf dem Chip befindet sich auch ein nichtflüchtiges Speichermedium 504.

Alternativ kann das nicht flüchtige Speichermedium 504 auch Bestandteil des Dokuments und mit dem Chip in einer Weise verbunden sein, dass der Prozessor 502 auf das Speichermedium 504 zugreifen kann um die darin enthaltenen Daten auszulesen bzw. auszuführen. Auf dem Speichermedium 504 ist eine erste Parametermenge 505, auch als P1 bezeichnet, oder eine Auswahl an ersten Parametern gespeichert. Außerdem sind ein oder mehrere Passwörter, zum Beispiel PINs 507, gespeichert. Auch ein zweiter Datenwert DW2, der dem Lesegerät zur Prüfung, ob der Nutzer 570 eine bestimmte Berechtigung hat bzw. bekommen soll, dient, ist auf dem Speichermedium 504 gespeichert. Ferner sind vierte 510, und/oder fünfte 512 und/oder sechste 514 Programminstruktionen in dem Dokument gespeichert.

Nach einer ersten Ausführungsform des Dokumentes umfassen die vierten Programminstruktionen 510 die Schritte 332, 334, 336, 344 und 346 bzw. die analogen ECDH-Schritte. Die vierten Programminstruktionen werden in Antwort auf den Erhalt einer ersten CAPDU vom durch Dokument durchgeführt. Die fünften Programminstruktionen 512 umfassen die Schritte 348, 349, 361, 362, 380, 382 und 372 bzw. die analogen ECDH-Schritte. Nach einigen dieser Ausführungsformen beinhaltet der Speicher des Dokuments auch sechste Programminstruktionen, welche die Schritte 369, 370 und 374 umfassen.

Nach alternativen Ausführungsformen des Dokuments umfassen die vierten Programminstruktionen 510 die Schritte 434, 436, 444 und 446 bzw. die analogen ECDH-Schritte. Die vierten Programminstruktionen werden während oder unmittelbar nach dem Bootvorgang des Dokuments durchgeführt. Die fünften Programminstruktionen 512 umfassen den Schritt 447, welche unmittelbar in Antwort auf den Empfang der 1. CAPDU ausgeführt wird, sowie die Schritte 448, 449, 461 und 462, die als Block nach oder parallel zum Senden der ersten RAPDU ausgeführt werden, bzw. die analogen ECDH-Schritte. Die sechsten Programminstruktionen, die in Antwort auf den Erhalt einer zweiten CAPDU vom Dokument durchgeführt werden, umfassen die Schritte 480, 482 und 472 bzw. die analogen ECDH-Schritte. Das Dokument kann ferner ein Sicherheitsmerkmal aufweisen, welches als Passwort für die Berechnung des Schlüssels, mit dem das Chiffrat berechnet bzw. vom Lesegerät entschlüsselt wird, dient. Auf der Oberfläche des Dokuments kann zum Beispiel ein optisch lesbarer Code 509 aufgedruckt oder anderweitig befestigt sein, welcher ein Passwort, z.B. eine CAN, codiert. Das Passwort kann den zweiten Datenwert beinhalten. Die Schnittstelle 510 kann z.B als kontaktlose Schnittstelle basierend auf dem NFC Standard oder dem ISO-Standard 14443 ausgebildet sein. Sie bildet die physikalische Grundlage für die Datenkommunikation zwischen Lesegerät und Dokument mittels eines Anfrage-Antwortprotokolls und als Grundlage für den Aufbau des sicheren Datenübertragungskanals 229. Optional können dem System 500 auch mehrere weitere Dokumente 520, 521 angehören, die die gleichen Komponenten wie Dokument 501 beinhalten, aber für andere Nutzer personalisiert wurden, also beispielsweise ein anderes Passwort (PIN) gespeichert bzw. eine andere CAN aufgedruckt haben.

**Figur** 5 zeigt ein Flussdiagramm wie nach einer Ausführungsform der Erfindung das Chiffrat E(s) berechnet werden kann. In Schritt 606 wird ein geheimer Administratorschlüssel SK.Admin 602, der für das gesamte System 500 (also das Lesegerät und ein bis mehrere Dokumente) gültig ist, verwendet, um eine Schlüsselableitungsfunktion KDF auf einem Passwort 604, z.B. einem dokumentspezifischen Wert (CAN, Karten-ID) und/oder einem nutzerspezifischen Wert (Nutzer-ID) anzuwenden, um als Resultat dieses Schrittes den geheimen Schlüssel SK.PinID zu berechnen. Das dokumentspezifische bzw. nutzerspezifische Merkmal 506 kann zum Beispiel zudem als zweiter Datenwert verwendet werden. In Schritt 610 wird der geheime Schlüssel SK.PinID zur Verschlüsselung eines ersten Datenwertes 608, z.B. einer Zufallszahl, verwendet, um das Chiffrat E(s) zu berechnen. Figur 5 stellt also eine Variante der Berechnungsschritte 104 bzw. 336 und 436 dar. In gleicher Weise kann der Schlüssel 614 durch das Lesegerät zum Entschlüsseln des Chiffrats abgeleitet werden, wobei vorzugsweise das Passwort automatisch über die weitere Schnittstelle 568, zum Beispiel aus der MRZ 509, vom Dokument gelesen wird. Vorzugsweise ist das Passwort 604 in dem Dokument bereits gespeichert. Das Dokument kann auch mehrere Passwörter gespeichert haben, von welchen eines mithilfe eines Auswahlparameters, der vom Lesegerät beispielsweise als Bestandteil der 1. CAPDU empfangen wird, ausgewählt werden.

## Patentansprüche

1. Verfahren zur Authentisierung eines Dokuments (ICC, 501) gegenüber einem Lesegerät (IFD, 550) unter Verwendung eines Diffie-Hellman-Protokolls, wobei in dem Lesegerät eine erste Parametermenge (P1) mit ein oder mehreren Parameterwerten in einem nicht-flüchtigen Speicher (504) gespeichert ist, wobei die erste Parametermenge bei der Herstellung, Initialisierung oder Konfiguration des Lesegeräts in diesem gespeichert wird, wobei die erste Parametermenge (P1) Parameterwerte enthält, die zur Durchführung des Diffie-Hellman-Protokolls notwendig sind, wobei die Kommunikation zwischen dem Dokument und dem Lesegerät nach einem Anforderungs-Antwort Chipkartenprotokoll erfolgt, umfassend:
- Erzeugung (102, 234, 334, 334', 434, 434') eines ersten Datenwertes (RND.ICC) durch das Dokument;
- Berechnung (104, 236, 336, 336', 436, 436') eines Chiffrats (E(s)), das zumindest den ersten Datenwert (RND.ICC) beinhaltet, mittels eines geheimen Schlüssels (SK) durch das Dokument;
- Übertragung (106) des Chiffrats (E(s)) vom Dokument an das Lesegerät;
- Entschlüsseln (108, 238, 338, 338', 438, 438') des Chiffrats E(s) durch das Lesegerät mittels des geheimen Schlüssels (SK);
- erste Durchführung (110) des Diffie-Hellman-Protokolls zur Vereinbarung eines ersten gemeinsamen Geheimnisses (H) zwischen dem Dokument und dem Lesegerät, wobei die erste Durchführung des Diffie-Hellman-Protokolls auf der ersten Parametermenge (P1) beruht;
- zweite Durchführung (112) des Diffie-Hellman-Protokolls zur Vereinbarung eines zweiten gemeinsamen Geheimnisses (H') zwischen dem Dokument und dem Lesegerät, wobei die zweite Durchführung des Diffie-Hellman-Protokolls auf einer zweiten Parametermenge (P2) beruht, wobei die weiteren Parameterwerte aus der ersten Parametermenge (P1) sowie dem ersten gemeinsamen Geheimnis (H) und dem ersten Datenwert (RND.ICC) abgeleitet sind;
- Authentisierung (122) des Dokuments gegenüber dem Lesegerät mit Hilfe des zweiten Geheimnisses (H').

2. Verfahren nach Anspruch 1,
wobei die erste Durchführung des Diffie-Hellman Protokolls umfasst:
- Erzeugung (244, 344, 344', 444, 444') eines ersten privaten Dokument-Schlüssels (PrK.ICC.DH1) und Berechnung eines ersten öffentlichen Dokument-Schlüssels (PuK.ICC.DH1) durch das Dokument, wobei die erste Parametermenge (P1) in die Berechnung des ersten öffentlichen Dokument-Schlüssels eingeht;
- Erzeugung (240, 340, 340', 440, 440') eines ersten privaten Lesegerät-Schlüssels (PrK.IFD.DH1) und Berechnung (242, 342, 342', 442, 442') eines ersten öffentlichen Lesegerät-Schlüssels (PuK.IFD.DH1) durch das Lesegerät, wobei die erste Parametermenge (P1) in die Berechnung des ersten öffentlichen Lesegerät-Schlüssels eingeht;
- Senden des ersten öffentlichen Dokument-Schlüssels (PuK.ICC.DH1) vom Dokument an das Lesegerät, wobei der erste öffentliche Dokument-Schlüssel und der erste private Lesegerät-Schlüssel in die lesegerätseitige Berechnung des ersten Geheimnisses (H) eingehen;
- Senden des ersten öffentlichen Lesegerät-Schlüssels (PuK.IFD.DH1) vom Lesegerät an das Dokument, wobei der erste öffentliche Lesegerät-Schlüssel und der erste private Dokument-Schlüssel in die dokumentseitige Berechnung des ersten Geheimnisses (H) eingehen;
wobei die zweite Durchführung des Diffie-Hellman Protokolls umfasst:
- dokumentseitiges (250, 349, 349', 449, 449') und lesegerätseitiges (254, 355, 355', 455, 455') Berechnen der zweiten Parametermenge (P2) aus der ersten Parametermenge (P1), wobei der erste Datenwert (RND.ICC) und das erste gemeinsame Geheimnis (H) in die Berechnung der zweiten Parametermenge eingehen;
- Erzeugung (260, 361, 361', 461, 461') eines zweiten privaten Dokument-Schlüssels (PrK.ICC.DH2) und Berechnung (262, 362, 362', 462, 462') eines zweiten öffentlichen Dokument-Schlüssels (PuK.ICC.DH2) durch das Dokument, wobei die ein oder mehreren Parameterwerte der zweiten Parametermenge (P2) in die Berechnung des zweiten öffentlichen Dokument-Schlüssel eingehen;
- Erzeugung (256, 357, 357', 457, 457') eines zweiten privaten Lesegerät-Schlüssels (PrK.IFD.DH2) und Berechnung (258, 359, 359', 459, 459') eines zweiten öffentlichen Lesegerät-Schlüssels (PuK.IFD.DH2) durch das Lesegerät, wobei die ein oder mehreren Parameterwerte der zweiten Parametermenge (P2) in die Berechnung des zweiten öffentlichen Lesegerät-Schlüssels eingehen;
- Senden des zweiten öffentlichen Dokument-Schlüssels (PuK.ICC.DH2) vom Dokument an das Lesegerät, wobei der zweite öffentliche Dokument-Schlüssel und der zweite private Lesegerät-Schlüssel in die lesegerätseitige Berechnung des zweiten Geheimnisses (H') eingehen;
- Senden des zweiten öffentlichen Lesegerät-Schlüssels (PuK.IFD.DH2) vom Lesegerät an das Dokument, wobei der öffentliche zweite Lesegerät-Schlüssel und der zweite private Dokument-Schlüssel in die dokumentseitige Berechnung des zweiten Geheimnisses (H') eingehen,
wobei die Authentisierung des Dokuments vorzugsweise umfasst:
- Berechnen (114, 272, 372, 372', 472, 472') eines Dokument-Authentisierungswertes (MAC.ICC) aus dem zweiten gemeinsamen Geheimnis (H') durch das Dokument;
- Übermittlung (116) des Dokument-Authentisierungswertes (MAC.ICC) vom Dokument an das Lesegerät;
- Überprüfung (124) des Dokument-Authentisierungswertes (MAC.ICC) durch das Lesegerät.

3. Verfahren nach einem der Ansprüche 1 oder 2, wobei die erste Parametermenge (P1):
- in einem nicht-flüchtigen Speicher des Dokuments gespeichert ist; oder
- als eine ausgewählte erste Parametermenge zusammen mit ein oder mehreren weiteren ersten Parametermengen in dem nicht-flüchtigen Speicher des Dokuments gespeichert ist; oder
- aus einer Vielzahl von ersten Parametermengen (P1, P1.1, P1.2, P1.3), die in dem nicht-flüchtigen Speicher gespeichert sind, durch Empfang eines Auswahlsignals ausgewählt wird, wobei im Zuge einer Übertragung des Auswahlsignals vom Lesegerät an das Dokument auch der erste öffentliche Lesegerät-Schlüssel (PuK.IFD.DH1) vom Lesegerät an das Dokument übertragen wird; oder
- vom Lesegerät an das Dokument übertragen wird, wobei im Zuge der Übertragung auch der erste öffentliche Lesegerät-Schlüssel (PuK.IFD.DH1) an das Dokument übertragen wird.

4. Verfahren nach einem der Ansprüche 1-3,
wobei der erste Datenwert (RND.ICC) zusammen mit ein oder mehreren zweiten Datenwerten (DW2) an das Lesegerät übertragen wird;
wobei die zweiten Datenwerte unverschlüsselt oder als Bestandteil des Chiffrats (E(s)) übermittelt werden;
wobei die ein oder mehreren zweiten Datenwerte vorzugsweise einer Gruppe von Datenwerten zugehören, welche beinhaltet:
• Datenwert zum Nachweis einer Berechtigung des Nutzers;
• Datenwert zum Nachweis der Identität des Nutzers;
• Datenwert zum Nachweis der Identität des Dokumentes;
• Datenwert zur Bezeichnung einer Applikation, eines Gerätes oder eines geographischen Gebiets, zu welchem eine Zugangsberechtigung angefordert wird;
• eine Dokument-ID;
• einen Identifikator der Berechtigung, deren Erteilung angefordert wird;
• eine Angabe eines Zeitraums während welchem die Berechtigung, deren Erteilung angefordert wird, gelten soll;
• einen Zähler von bisher erfolgten Authentifizierungsversuchen gegenüber dem Lesegerät;
wobei das Verfahren ferner beinhaltet:
- Empfang der ein oder mehreren zweiten Datenwerte durch das Lesegerät,
- falls die ein oder mehreren zweiten Datenwerte als Bestandteil des Chiffrats (E(s)) übertragen wurden, Entschlüsselung auch der ein oder mehreren zweiten Datenwerte durch das Lesegerät;
- Überprüfung (238, 338, 338', 438, 438') durch das Lesegerät, ob die ein oder mehreren zweiten Datenwerte vordefinierte Kriterien erfüllen;
- Signalisierung (124) der Berechtigung des Nutzers nur, falls das Dokument sich erfolgreich authentisiert hat und zudem jeder der ein oder mehreren zweiten Datenwerte die vordefinierten Kriterien erfüllen.

5. Verfahren nach einem der vorigen Ansprüche 2-4, wobei in Antwort auf einen Empfang einer ersten RAPDU (352), die vom Dokument an das Lesegerät gesendet wurde und den ersten öffentlichen Dokument-Schlüssel enthält, durch das Lesegerät die folgenden Schritte durchgeführt werden:
- eine lesegerätseitige Berechnung des ersten gemeinsamen Geheimnisses (H);
- die Entschlüsselung des Chiffrats (E(s));
- die lesegerätseitige Berechnung der zweiten Parametermenge (P2);
- die Erzeugung des zweiten privaten Lesegerät-Schlüssels (PrK.IFD.DH2) und die Berechnung des zweiten öffentlichen Lesegerät-Schlüssels (PuK.IFD.DH2);
- das Senden des zweiten öffentlichen Lesegerät-Schlüssels vom Lesegerät an das Dokument als Bestandteil einer zweiten CAPDU (354).

6. Verfahren nach einem der vorigen Ansprüche 2-5, wobei in Antwort auf einen Empfang einer zweiten CAPDU (354), die vom Lesegerät an das Dokument übertragen wurde und die den zweiten öffentlichen Lesegerät-Schlüssel (PuK.IFD.DH2) enthält, durch das Dokument die folgenden Schritte durchgeführt werden:
- die dokumentseitige Berechnung (339, 339') des ersten gemeinsamen Geheimnisses (H);
- die dokumentseitige Berechnung (355, 355') der zweiten Parametermenge (P2);
- die dokumentseitige Erzeugung (357, 357') des zweiten privaten Dokument-Schlüssels (PrK.ICC.DH2) und die dokumentseitige Berechnung (359, 359') des zweiten öffentlichen Dokument-Schlüssels (PuK.ICC.DH2);
- die dokumentseitige Berechnung des Dokument-Authentisierungswertes (MAC.ICC);
- das Senden des zweiten öffentlichen Dokument-Schlüssels (PuK.ICC.DH2) vom Dokument an das Lesegerät zusammen mit dem Dokument-Authentisierungswert (MAC.ICC) als Bestandteil einer zweiten RAPDU (356) wobei die Authentisierung des Dokuments gegenüber dem Lesegerät mit Hilfe des Dokument-Authentisierungswertes (MAC.ICC) erfolgt.

7. Verfahren nach einem der Ansprüche 1-6, wobei eine Vielzahl von Passwörtern (507) in dem nicht-flüchtigen Speicher des Dokuments gespeichert sind, wobei für jedes der Passwörter ein für die Chiffratberechnung zu verwendender Schlüssel (SK.PinID) berechnet wird, wobei die Berechnung und Speicherung des Chiffrats (E(s)) für jedes dieser Passwörter durchgeführt wird, sodass nach jedem Bootvorgang des Dokuments im Dokument ein erster öffentlicher Dokument-Schlüssel (PuK.ICC.DH1) und für jedes auf dem Dokument gespeicherte Passwortᵢ ein zugehöriges Chiffrat (E(s))ᵢ gespeichert sind.

8. Verfahren nach einem der Ansprüche 2-4, wobei die erste Parametermenge (P1) in dem nicht-flüchtigen Speicher (504) des Dokuments gespeichert ist, wobei das Dokument bereits vor oder parallel zu dem Empfang einer ersten CAPDU, die den ersten öffentlichen Lesegerät-Schlüssel (PuK.IFD.DH1) enthält, die folgenden Schritte ausführt:
- das Erzeugen (434, 434') des ersten Datenwertes (RND.ICC);
- die Berechnung (436, 436') des Chiffrats (E(s));
- die Erzeugung (444, 444') des ersten privaten Dokument-Schlüssels (PrK.ICC.DH1);
- die Berechnung (446, 446') des ersten öffentlichen Dokument-Schlüssels (PuK.ICC.DH1);
- eine Speicherung des Chiffrats (E(s)) und des ersten öffentlichen Dokument-Schlüssels (PuK.ICC.DH1);
wobei das Senden des zweiten öffentlichen Dokument-Schlüssels vom Dokument an das Lesegerät beinhaltet: in unmittelbarer Antwort auf den Empfang der ersten CAPDU (450) das Senden einer ersten RAPDU (452) vom Dokument an das Lesegerät, wobei die erste RAPDU das gespeicherte Chiffrat (E(s)) und den gespeicherten ersten öffentlichen Dokument-Schlüssel (PuK.ICC.DH1) enthält.

9. Verfahren nach einem der vorigen Ansprüche 4-8,
- wobei die Authentisierung des Dokuments eine Überprüfung (338, 338', 438, 438') der ein oder mehreren zweiten Datenwerte beinhaltet; und
- wobei die Überprüfung vor der ersten Durchführung des Diffie-Hellman Protokolls erfolgt, wobei die erste Durchführung des Diffie-Hellman Protokolls und nachfolgender Berechnungsschritte nur erfolgt, falls die Prüfung ergibt, dass jeder der ein oder mehreren zweiten Datenwerte (DW2) ein oder mehrere vorgegebene Kriterien erfüllen, oder
- wobei die Überprüfung der ein oder mehreren zweiten Datenwerte parallel zur Durchführung des ersten und/oder zweiten Diffie-Hellman Protokolls erfolgt,
- wobei die Durchführung des ersten und zweiten Diffie-Hellman Protokolls oder nachfolgender Berechnungsschritte automatisch abgebrochen wird, falls zumindest einer der ein oder mehreren zweiten Datenwerte die Kriterien nicht erfüllt.

10. Verfahren nach einem der vorigen Ansprüche 4-9, wobei falls der zweite Datenwert die Kriterien erfüllt und das Dokument sich erfolgreich authentisiert hat, wobei das Verfahren ferner umfasst:
- Senden eines Befehls an einen Verschlussmechanismus, um diesen von einem geschlossenen in einen geöffneten Zustand zu überführen und dem Nutzer Zutritt in oder Zugriff auf einen von dem Verschlussmechanismus geschützten Bereich zu ermöglichen; oder
- Ermöglichung des Zugriffs auf geschützte Daten oder einen geschützten Datenspeicher; oder
- automatisches Ausführen einer vorgegebenen Programmroutine oder einer vorgegebenen Bewegung einer mechanischen Vorrichtung, wobei die vorgegebene Programmroutine oder Bewegung nur von Nutzern mit einer Berechtigung ausgeführt werden können.

11. Lesegerät (IFD, 550), umfassend:
- eine Schnittstelle (510) zum Datenaustausch mit einem Dokument (ICC, 501), das einem Nutzer zugeordnet ist;
- einen Prozessor (552);
- einen nicht-flüchtigen Datenspeicher (556) mit von dem Prozessor ausführbaren Programminstruktionen (560, 562, 564) und mit ein oder mehreren ersten Parametermengen (P1, 505') für die Durchführung eines Diffie-Hellman Protokolls zwischen dem Dokument und dem Lesegerät, wobei die ersten Parametermengen bei der Herstellung, Initialisierung oder Konfiguration des Lesegeräts in diesem gespeichert werden, wobei die Durchführung des Diffie-Hellman Protokolls nach einem Anforderungs-Antwort Chipkartenprotokoll erfolgt, wobei das Lesegerät bei Ausführung der Programminstruktionen ausgebildet ist zu:
• Empfang eines Chiffrats (E(s)), das zumindest einen ersten Datenwert (RND.ICC) in verschlüsselter Form beinhaltet, vom Dokument;
• Entschlüsseln (337, 337', 437, 437') des Chiffrats (E(s));
• erste Durchführung des Diffie-Hellman-Protokolls zur Vereinbarung eines ersten gemeinsamen Geheimnisses (H) zwischen dem Dokument und dem Lesegerät, wobei das Diffie-Hellman-Protokoll auf einer (P1) der ersten Parametermengen beruht;
• zweite Durchführung des Diffie-Hellman-Protokolls zur Vereinbarung eines zweiten gemeinsamen Geheimnisses (H') zwischen dem Dokument und dem Lesegerät, wobei die zweite Durchführung des Diffie-Hellman-Protokolls auf einer zweiten Parametermenge (P2) beruht, wobei die weiteren Parameterwerte aus der ersten Parametermenge (P1) sowie dem ersten gemeinsamen Geheimnis (H) und dem ersten Datenwert (RND.ICC) abgeleitet sind;
• Empfang eines Dokument-Authentisierungswertes (MAC.ICC) vom Dokument, wobei in den Dokument-Authentisierungswert das zweite Geheimnis eingegangen ist;
• Authentifizierung des Dokuments durch das Lesegerät mit Hilfe des Dokument-Authentisierungswertes (MAC.ICC).

12. Lesegerät (IFD) nach einem der Ansprüche 10 oder 11, wobei das Lesegerät zur Übertragung der ersten Parametermenge (P1) oder eines Auswahlsignals an das Dokument ausgebildet ist, wobei das Auswahlsignal zur Auswahl der ersten Parametermenge aus einer im Dokument gespeicherten Vielzahl an ersten Parametermengen geeignet ist, wobei im Zuge der Übertragung der ersten Parametermenge oder des Auswahlsignals auch der erste öffentliche Lesegerät-Schlüssel (PuK.IFD.DH1) an das Dokument übertragen wird.

13. Lesegerät (IFD) nach einem der Ansprüche 10-12, wobei die Programminstruktionen erste (560) und/oder zweite (562) und/oder dritte (564) Programminstruktionen beinhalten, wobei das Lesegerät bei Ausführung der ersten Programminstruktionen ausgebildet ist für:
- die Erzeugung des ersten privaten Lesegerät-Schlüssel (PrK.IFD.DH1) und die Berechnung des ersten öffentlichen (PuK.IFD.DH1) Lesegerät-Schlüssels; und
- das Senden zumindest des ersten öffentlichen Lesegerät-Schlüssels als Bestandteil einer ersten CAPDU an das Dokument;
wobei die zweiten Programminstruktionen in Antwort auf den Erhalt einer ersten RAPDU ausgeführt werden, wobei die erste RAPDU in Antwort auf das Senden der ersten CAPDU vom Lesegerät empfangen wird, wobei die erste RAPDU das Chiffrat (E(s)) und den ersten öffentlichen Dokument-Schlüssel (PuK.ICC.DH1) enthält;
wobei das Lesegerät bei Ausführung der zweiten Programminstruktionen ausgebildet ist für:
- die Entschlüsselung des Chiffrats (E(s));
- die Berechnung des ersten gemeinsamen Geheimnisses;
- die Berechnung der zweiten Parametermenge (P2);
- die Erzeugung des zweiten privaten Lesegerät-Schlüssels (PrK.IFD.DH2) und die Berechnung des zweiten öffentlichen Lesegerät-Schlüssels (PuK.IFD.DH2);
- das Senden des zweiten öffentlichen Lesegerät-Schlüssels als Bestandteil einer zweiten CAPDU an das Dokument,
wobei die dritten Programminstruktionen in Antwort auf den Erhalt einer zweiten RAPDU (356) ausgeführt werden, wobei die zweite RAPDU in Antwort auf das Senden der zweiten CAPDU (354) vom Lesegerät empfangen wird, wobei die zweite RAPDU den zweiten öffentlichen Dokument-Schlüssel (PuK.ICC.DH2) und den Dokument-Authentisierungswert (MAC.ICC) enthält,
wobei das Lesegerät bei Ausführung der dritten Programminstruktionen ausgebildet ist für die Authentisierung des Dokuments gegenüber dem Lesegerät durch:
- die Berechnung (364, 364') des zweiten gemeinsamen Geheimnisses (H');
- Überprüfung (367, 367') des Dokument-Authentisierungswertes (MAC.ICC) unter Verwendung des zweiten gemeinsamen Geheimnisses (H').

14. Dokument (ICC, 501), das einem Nutzer zugeordnet ist, umfassend:
- eine Schnittstelle (510) zum Datenaustausch mit einem Lesegerät (IFD, 550);
- einen Prozessor (502);
- einen nicht-flüchtigen Datenspeicher (504) mit von dem Prozessor ausführbaren Programminstruktionen (512, 514, 517) für die Durchführung eines Diffie-Hellman Protokolls zwischen dem Dokument und dem Lesegerät, wobei die Durchführung des Diffie-Hellman Protokolls zwischen dem Dokument und dem Lesegerät nach einem Anforderungs-Antwort Chipkartenprotokoll erfolgt,
wobei das Dokument bei Ausführung der Programminstruktionen ausgebildet ist zur:
- Erzeugung (334, 334', 434, 434') eines ersten Datenwertes (RND.ICC);
- Berechnung (336, 336', 436, 436') eines Chiffrats (E(s)) aus zumindest dem ersten Datenwert mittels eines geheimen Schlüssels (SK);
- Übertragung des Chiffrats (E(s)) an das Lesegerät;
- erste Durchführung des Diffie-Hellman-Protokolls zur Vereinbarung eines ersten gemeinsamen Geheimnisses (H) zwischen dem Dokument und dem Lesegerät, wobei die erste Durchführung des Diffie-Hellman-Protokolls auf einer ersten Parametermenge (P1) beruht, wobei die dokumentseitige Durchführung des ersten Diffie-Hellman-Protokolls dadurch initiiert wird, dass das Dokument einen ersten öffentlichen Lesegerät-Schlüssel von dem Lesegerät empfängt, wobei der erste öffentlichen Lesegerät-Schlüssel von dem Lesegerät mittels einer bereits bei Beginn der Durchführung des ersten Diffie-Hellman-Protokolls in dem Lesegerät gespeicherten ersten Parametermenge (P1) berechnet ist,
- zweite Durchführung des Diffie-Hellman-Protokolls zur Vereinbarung eines zweiten gemeinsamen Geheimnisses (H') zwischen dem Dokument und dem Lesegerät, wobei die zweite Durchführung des Diffie-Hellman-Protokolls auf einer zweiten Parametermenge P2 beruht, deren Parameterwerte aus der ersten Parametermenge P1 sowie dem ersten gemeinsamen Geheimnis (H) und dem ersten Datenwert (RND.ICC) abgeleitet sind, wobei die erste und zweite Durchführung des Diffie-Hellman Protokolls der Authentisierung des Dokuments gegenüber dem Lesegerät dienen;
- Berechnen (372, 372', 472, 472') eines Dokument-Authentisierungswertes (MAC.ICC) aus dem zweiten gemeinsamen Geheimnis (H') durch das Dokument;
- Übermittlung des Dokument-Authentisierungswertes (MAC.ICC) vom Dokument an das Lesegerät.

15. Dokument (ICC) nach Anspruch 14, wobei die Programminstruktionen vierte und/oder fünfte Programminstruktionen beinhalten,
wobei die vierten Programminstruktionen in Antwort auf den Empfang einer ersten CAPDU (350), welche den ersten öffentlichen Lesegerät-Schlüssel enthält, ausgeführt werden, wobei das Dokument bei Ausführung der vierten Programminstruktionen ausgebildet ist für:
- die Erzeugung (334, 334') des ersten Datenwertes (RND.ICC);
- die Berechnung (336, 336') des Chiffrats (E(s));
- die Erzeugung (344, 344') des ersten öffentlichen Dokument-Schlüssel (PuK.ICC.DH1) und die Berechnung (346, 346') des ersten privaten Dokument-Schlüssel (PrK.ICC.DH1);
- das Senden des ersten öffentlichen Dokument-Schlüssels zusammen mit dem Chiffrat (E(s)) an das Lesegerät als Bestandteile einer ersten RAPDU im Zuge der ersten Ausführung des Diffie-Hellman Protokolls;
wobei die fünften Programminstruktionen in Antwort auf den Erhalt einer zweiten CAPDU ausgeführt werden, wobei die zweite CAPDU in Antwort auf das Senden der ersten RAPDU vom Dokument empfangen wird, wobei die zweite CAPDU einen zweiten öffentlichen Lesegerät-Schlüssel (PuK.IFD.DH2) enthält, wobei das Dokument bei Ausführung der fünften Programminstruktionen ausgebildet ist für:
- die Berechnung (348, 348') des ersten gemeinsamen Geheimnisses (H);
- die Berechnung (349, 349') der zweiten Parametermenge (P2);
- die Erzeugung (361, 361') des zweiten privaten Dokument-Schlüssels (PrK.ICC.DH2) und die Berechnung (362, 362') des zweiten öffentlichen Dokument-Schlüssels (PuK.ICC.DH2);
- die Berechnung (380, 380') des zweiten gemeinsamen Geheimnisses (H');
- die Berechnung (372, 372') des Dokument-Authentisierungswertes (MAC.ICC);
- das Senden des dokumentseitigen Authentisierungswertes (MAC.ICC) zusammen mit dem zweiten öffentlichen Schlüssel als Bestandteil einer zweiten RAPDU an das Lesegerät zur Durchführung der Authentisierung des Dokuments gegenüber dem Lesegerät.

16. Dokument (ICC) nach einem der Ansprüche 14-15, wobei der nicht-flüchtige Speicher des Dokuments die erste Parametermenge (P1) oder eine Auswahl der ersten Parametermenge aus einer Vielzahl weiterer erster Parametermengen beinhaltet, wobei die Programminstruktionen vierte und/oder fünfte und/oder sechste Programminstruktionen beinhalten, wobei die vierten Programminstruktionen im Zuge eines Boot-Vorgangs des Dokuments oder unmittelbar im Anschluss an den Boot-Vorgang ausgeführt werden, wobei das Dokument bei Ausführung der vierten Programminstruktionen ausgebildet ist für:
- die Erzeugung (434, 434') des ersten Datenwertes;
- die Berechnung (436, 436') des Chiffrats (E(s));
- die Erzeugung (444, 444') des ersten privaten Dokument-Schlüssels (PrK.ICC.DH1) und die Berechnung (446, 446') des ersten öffentlichen Dokument-Schlüssels (PuK.ICC.DH1);
- eine Speicherung des Chiffrats (E(s)) und des ersten öffentlichen Dokument-Schlüssels in dem Dokument;
wobei die fünften Programminstruktionen in Antwort auf den Empfang einer ersten CAPDU enthaltend den ersten öffentlichen Lesegerät-Schlüssel ausgeführt werden, wobei das Dokument bei Ausführung der fünften Programminstruktionen ausgebildet ist für:
- unmittelbar in Antwort auf den Empfang der ersten CAPDU (450), Lesen des gespeicherten ersten öffentlichen Dokument-Schlüssels und des Chiffrats (E(s)) und Senden (447, 447') des gelesenen ersten öffentlichen Dokument-Schlüssels und des Chiffrats (E(s) als Bestandteil einer ersten RAPDU (452) an das Lesegerät;
wobei die Ausführung der fünften Programminstruktionen ferner die Ausführung der folgenden Programminstruktionen nach oder parallel zum Senden der ersten RAPDU beinhaltet:
- Lesen des gespeicherten ersten öffentlichen Dokument-Schlüssels (PuK.ICC.DH1) und des Chiffrats (E(s));
- Berechnung (448, 448') des ersten gemeinsamen Geheimnisses (H);
- die dokumentseitige Berechnung (450, 450') der zweiten Parametermenge (P2);
- die Erzeugung (460, 460') des zweiten privaten Dokument-Schlüssels und die Berechnung (462, 462') des zweiten öffentlichen Dokument-Schlüssels;
wobei die sechsten Programminstruktionen in Antwort auf den Erhalt einer zweiten CAPDU ausgeführt werden, wobei die zweite CAPDU in Antwort auf das Senden der ersten RAPDU vom Dokument empfangen wird, wobei die zweite CAPDU (454) den zweiten öffentlichen Lesegerät-Schlüssel enthält, wobei das Dokument bei Ausführung der sechsten Programminstruktionen ausgebildet ist für:
- die Berechnung (480, 480') des zweiten gemeinsamen Geheimnisses (H');
- die Berechnen (482, 482') eines Dokument-Authentisierungswertes (MAC.ICC);
- die Übermittlung des Dokument-Authentisierungswertes an das Lesegerät, wobei der zweite öffentliche Dokument-Schlüssel (PuK.ICC.DH2) vom Dokument an das Lesegerät zusammen mit dem Dokument-Authentisierungswert (MAC.ICC) als Bestandteil einer zweiten RAPDU (456) gesendet wird.

17. Computerprogrammprodukt mit computerinterpretierbaren Instruktionen zur Durchführung der Programminstruktionen nach einem der vorigen Ansprüche 1-10.

## Claims

1. A method for authenticating a document (ICC, 501) to a reader (IFD, 550) using a Diffie-Hellman protocol, wherein a first parameter set (P1) comprising one or more parameter values is stored in the reader in a non-volatile memory (504), wherein the first parameter set is stored in the reader at the time of production, initialisation or configuration of the reader, wherein the first parameter set (P1) contains parameter values which are necessary for performing the Diffie-Hellman protocol, wherein the communication between the document and the reader is implemented on the basis of a challenge-response chip card protocol, said method comprising the steps of:
- producing (102, 234, 334, 334', 434, 434') a first data value (RND.ICC) by the document;
- calculating (104, 236, 336, 336', 436, 436') a ciphertext (E(s)), which includes at least the first data value (RND.ICC), by means of a secret key (SK) by the document;
- transmitting (106) the ciphertext (E(s)) from the document to the reader;
- decrypting (108, 238, 338, 338', 438, 438') the ciphertext (E(s)) by the reader by means of the secret key (SK);
- performing (110) the Diffie-Hellman protocol for a first time in order to agree a first shared secret (H) between the document and the reader, wherein the first performance of the Diffie-Hellman protocol is based on the first parameter set (P1);
- performing (112) the Diffie-Hellman protocol for a second time in order to agree a second shared secret (H') between the document and the reader, wherein the second performance of the Diffie-Hellman protocol is based on a second parameter set (P2), wherein the further parameter values are derived from the first parameter set (P1) and the first shared secret (H) and the first data value (RND.ICC);
- authenticating (122) the document to the reader with the aid of the second secret (H').

2. The method according to claim 1, wherein the first performance of the Diffie-Hellman protocol comprises the steps of:
- producing (244, 344, 344', 444, 444') a first private document key (PrK.ICC.DH1) and calculating a first public document key (PuK.ICC.DH1) by the document, wherein the first parameter set (P1) is included in the calculation of the first public document key;
- producing (240, 340, 340', 440, 440') a first private reader key (PrK.IFD.DH1) and calculating (242, 342, 342', 442, 442') a first public reader key (PuK.IFD.DH1) by the reader, wherein the first parameter set (P1) is included in the calculation of the first public reader key;
- sending the first public document key (PuK.ICC.DH1) from the document to the reader, wherein the first public document key and the first private reader key are included in the calculation by the reader of the first secret (H);
- sending the first public reader key (PuK.IFD.DH1) from the reader to the document, wherein the first public reader key and the first private document key are included in the calculation by the document of the first secret (H);
wherein the second performance of the Diffie-Hellman protocol comprises the steps of:
- calculating the second parameter set (P2) by the document (250, 349, 349', 449, 449') and by the reader (254, 355, 355', 455, 455') from the first parameter set (P1), wherein the first data value (RND.ICC) and the first shared secret (H) are included in the calculation of the second parameter set;
- producing (260, 361, 361', 461, 461') a second private document key (PrK.ICC.DH2) and calculating (262, 362, 362', 462, 462') a second public document key (PuK.ICC.DH2) by the document, wherein the one or more parameter values of the second parameter set (P2) is/are included in the calculation of the second public document key;
- producing (256, 357, 357', 457, 457') a second private reader key (PrK.IFD.DH2) and calculating (258, 359, 359', 459, 459') a second public reader key (PuK.IFD.DH2) by the reader, wherein the one or more parameter values of the second parameter set (P2) is/are included in the calculation of the second public reader key;
- sending the second public document key (PuK.ICC.DH2) from the document to the reader, wherein the second public document key and the second private reader key are included in the calculation by the reader of the second secret (H');
- sending the second public reader key (PuK.IFD.DH2) from the reader to the document, wherein the public second reader key and the second private document key are included in the calculation by the document of the second secret (H'),
wherein the authentication of the document preferably comprises the steps of:
- calculating (114, 272, 372, 372', 472, 472') a document authentication value (MAC.ICC) from the second shared secret (H') by the document;
- transmitting (116) the document authentication value (MAC.ICC) from the document to the reader;
- checking (124) the document authentication value (MAC.ICC) by the reader.

3. The method according to either one of claims 1 or 2, wherein the first parameter set (P1):
- is stored in a non-volatile memory of the document; or
- is stored as a selected first parameter set together with one or more further first parameter sets in the non-volatile memory of the document; or
- is selected from a plurality of first parameter sets (P1, P1.1, P1.2, P1.3), which are stored in the non-volatile memory, by receipt of a selection signal, wherein, during the course of transmission of the selection signal from the reader to the document, the first public reader key (PuK.IFD.DH1) is also transmitted from the reader to the document; or
- is transmitted from the reader to the document, wherein, during the course of the transmission, the first public reader key (PuK.IFD.DH1) is also transmitted to the document.

4. The method according to any one of claims 1-3,
wherein the first data value (RND.ICC) is transmitted to the reader together with one or more second data values (DW2);
wherein the second data values are transmitted in unencrypted form or as part of the ciphertext (E(s));
wherein the one or more second data values preferably belong to a group of data values which includes:
• data value for detecting authorisation of the user;
• data value for detecting the identity of the user;
• data value for detecting the identity of the document;
• data value for designating an application, a device, or a geographical area for which access authorisation is requested;
• a document ID;
• an identifier of the authorisation, the granting of which has been requested;
• a specification of a period of time during which the authorisation, the granting of which has been requested, shall be valid;
• a counter of previous attempts for authentication to the reader;
wherein the method also includes the steps of:
- receiving the one or more second data values by the reader,
- if the one or more second data values has/have been transmitted as part of the ciphertext (E(s)), decrypting also the one or more second data values by the reader;
- checking (238, 338, 338', 438, 438') by the reader whether the one or more second data values satisfies/satisfy predefined criteria;
- signalling (124) the authorisation of the user only if the document has been successfully authenticated and in addition each of the one or more second data values meets the predefined criteria.

5. The method according to any one of preceding claims 2-4, wherein, in response to the receipt of a first RAPDU (352), which was sent from the document to the reader and contains the first public document key, the following steps are carried out by the reader;
- calculating the first shared secret (H) by the reader;
- decrypting the ciphertext (E(s));
- calculating the second parameter set (P2) by the reader;
- producing the second private reader key (PrK.IFD.DH2) and calculating the second public reader key (PuK.IFD.DH2);
- sending the second public reader key from the reader to the document as part of a second CAPDU (354).

6. The method according to any one of preceding claims 2-5, wherein, in response to the receipt of a second CAPDU (354), which has been transmitted from the reader to the document and which contains the second public reader key (PuK.IFD.DH2), the following steps are performed by the document:
- calculating (339, 339') the first shared secret (H) by the document;
- calculating (355, 355') the second parameter set (P2) by the document;
- producing (357, 357') the second private document key (PrK.ICC.DH2) by the document and calculating (359, 359') the second public document key (PuK.ICC.DH2) by the document;
- calculating the document authentication value (MAC.ICC) by the document;
- sending the second public document key (PuK.ICC.DH2) from the document to the reader together with the document authentication value (MAC.ICC) as part of a second RAPDU (356), wherein the document is authenticated to the reader with the aid of the document authentication value (MAC.ICC).

7. The method according to any one of claims 1-6, wherein a plurality of passwords (507) are stored in the non-volatile memory of the document, wherein a key (SK.PinID) that is to be used for the ciphertext calculation is calculated for each of the passwords, wherein the calculation and storage of the ciphertext (E(s)) is performed for each of these passwords, such that, after each boot-up procedure of the document, a first public document key (PuK.ICC.DH1) and, for each password stored on the document, an associated ciphertext (E(s)) are stored in the document.

8. The method according to any one of claims 2-4, wherein the first parameter set (P1) is stored in the non-volatile memory (504) of the document, wherein the document, already before or parallel to the receipt of a first CAPDU, which contains the first public reader key (PuK.IFD.DH1), performs the steps of:
- producing (434, 434') the first data value (RND.ICC);
- calculating (436, 436') the ciphertext (E(s));
- producing (444, 444') the first private document key (PrK.ICC.DH1);
- calculating (446, 446') the first public document key (PuK.ICC.DH1);
- storing the ciphertext (E(s)) and the first public document key (PuK.ICC.DH1);
wherein the sending of the second public document key from the document to the reader includes: in direct response to the receipt of the first CAPDU (450), sending a first RAPDU (452) from the document to the reader, wherein the first RAPDU contains the stored ciphertext (E(s)) and the stored first public document key (PuK.ICC.DH1).

9. The method according to any one of preceding claims 4-8,
- wherein the authentication of the document includes a checking (338, 338', 438, 438') of the one or more second data values; and
- wherein the checking is performed before the first performance of the Diffie-Hellman protocol, wherein the first performance of the Diffie-Hellman protocol and subsequent calculation steps are performed only if the check reveals that each of the one or more second data values (DW2) satisfies one or more specified criteria, or
- wherein the checking of the one or more second data values is performed parallel to the performance of the first and/or second Diffie-Hellman protocol,
- wherein the performance of the first and second Diffie-Hellman protocol or subsequent calculation steps is automatically interrupted if at least one of the one or more second data values does not satisfy the criteria.

10. The method according to any one of preceding claims 4-9, wherein, if the second data value satisfies the criteria and the document is successfully authenticated, the method also comprises the steps of:
- sending a command to a closure mechanism in order to transfer said mechanism from a closed state to an open state and to enable the user entry into or access to an area protected by the closure mechanism; or
- enabling access to protected data or a protected data memory; or
- automatically executing a specified program routine or a specified movement of a mechanical device, wherein the specified program routine or movement can be executed only by users having authorisation.

11. A reader (IFD, 550), comprising:
- an interface (510) for data exchange with a document (ICC, 501) assigned to a user;
- a processor (552);
- a non-volatile data memory (556) containing program instructions (560, 562, 564) that can be executed by the processor, and comprising one or more first parameter sets (P1, 505') for the performance of a Diffie-Hellman protocol between the document and the reader, wherein the first parameter sets are stored in the reader at the time of production, initialisation or configuration of the reader, wherein the Diffie-Hellman protocol is performed on the basis of a challenge-response chip card protocol, wherein the reader, when performing the program instructions, is designed to:
• receive a cipher text (E(s)), which includes at least a first data value (RND.ICC) in encrypted form, from the document;
• decrypt (337, 337', 437, 437') the ciphertext (E(s));
• perform the Diffie-Hellman protocol for a first time in order to agree a first shared secret (H) between the document and the reader, wherein the Diffie-Hellman protocol is based on one (P1) of the first parameter sets;
• perform the Diffie-Hellman protocol for a second time in order to agree a second shared secret (H') between the document and the reader, wherein the second performance of the Diffie-Hellman protocol is based on a second parameter set (P2), wherein the further parameter values are derived from the first parameter set (P1) and the first shared secret (H) and the first data value (RND.ICC);
• receive a document authentication value (MAC.ICC) from the document, wherein the second secret is included in the document authentication value;
• authenticate the document by the reader with the aid of the document authentication value (MAC.ICC).

12. The reader (IFD) according to either one of claims 10 or 11, wherein the reader is designed to transmit the first parameter set (P1) or a selection signal to the document, wherein the selection signal is suitable for selecting the first parameter set from a plurality of first parameter sets stored in the document, wherein, during the course of the transmission of the first parameter set or of the selection signal, the first public reader key (PuK.IFD.DH1) is also transmitted to the document.

13. The reader (IFD) according to any one f claims 10-12, wherein the program instructions include first (560) and/or second (562) and/or third (564) program instructions, wherein the reader, when executing the first program instructions, is designed for:
- producing the first private reader key (PrK.IFD.DH1) and calculating the first public (PuK.IFD.DH1) reader key; and
- sending at least the first public reader key as part of a first CAPDU to the document;
wherein the second program instructions are executed in response to the receipt of a first RAPDU, wherein the first RAPDU is received by the reader in response to the sending of the first CAPDU, wherein the first RAPDU contains the ciphertext (E(s)) and the first public document key (PuK.ICC.DH1);
wherein the reader, when executing the second program instructions, is designed for:
- decrypting the ciphertext (E(s));
- calculating the first shared secret;
- calculating the second parameter set (P2);
- producing the second private reader key (PrK.IFD.DH2) and calculating the second public reader key (PuK.IFD.DH2);
- sending the second public reader key as part of a second CAPDU to the document,
wherein the third program instructions are executed in response to the receipt of a second RAPDU (356), wherein the second RAPDU is received by the reader in response to the sending of the second CAPDU (354), wherein the second RAPDU contains the second public document key (PuK.ICC.DH2) and the document authentication value (MAC.ICC),
wherein the reader, when executing the third program instructions, is designed for authenticating the document to the reader by:
- calculating (364, 364') the second shared secret (H');
- checking (367, 367') the document authentication value (MAC.ICC) using the second shared secret (H').

14. A document (ICC, 501), which is assigned to a user, comprising:
- an interface (510) for data exchange with a reader (IFD, 550);
- a processor (502);
- a non-volatile data memory (504) containing program instructions (512, 514, 517) that can be executed by the processor for the performance of a Diffie-Hellman protocol between the document and the reader, wherein the Diffie-Hellman protocol is performed between the document and the reader on the basis of a challenge-response chip card protocol,
wherein the document, when executing the program instructions, is designed to:
- produce (334, 334', 434, 434') a first data value (RND.ICC);
- calculate (336, 336', 436, 436') a ciphertext (E(s)) from at least the first data value by means of a secret key (SK);
- transmit the ciphertext (E(s)) to the reader;
- perform the Diffie-Hellman protocol for a first time in order to agree a first shared secret (H) between the document and the reader, wherein the first performance of the Diffie-Hellman protocol is based on a first parameter set (P1), wherein the performance of the first Diffie-Hellman protocol by the document is initiated in that the document receives a first public reader key from the reader, wherein the first public reader key is calculated by the reader by means of a first parameter set (P1) already stored in the reader at the start of the performance of the first Diffie-Hellman protocol,
- perform the Diffie-Hellman protocol for a second time in order to agree a second shared secret (H') between the document and the reader, wherein the second performance of the Diffie-Hellman protocol is based on a second parameter set P2, the parameter values of which are derived from the first parameter set P1 and the first shared secret (H) and the first data value (RND.ICC), wherein the first and second performance of the Diffie-Hellman protocol are used to authenticate the document to the reader;
- calculate (372, 372', 472, 472') a document authentication value (MAC.ICC) from the second shared secret (H') by the document;
- transmit the document authentication value (MAC.ICC) from the document to the reader.

15. The document (ICC) according to claim 14, wherein the program instructions include fourth and/or fifth program instructions,
wherein the fourth program instructions are executed in response to the receipt of a first CAPDU (350), which contains the first public reader key, wherein the document, when executing the fourth program instructions, is designed for:
- producing (334, 334') the first data value (RND.ICC);
- calculating (336, 336') the ciphertext (E(s));
- producing (344, 344') the first public document key (PuK.ICC.DH1) and calculating (346, 346') the first private document key (PrK.ICC.DH1);
- sending the first public document key together with the ciphertext (E(s)) to the reader as part of a first RAPDU during the course of the first execution of the Diffie-Hellman protocol;
wherein the fifth program instructions are executed in response to the receipt of a second CAPDU, wherein the second CAPDU is received in response to the sending of the first RAPDU by the document, wherein the second CAPDU contains a second public reader key (PuK.IFD.DH2), wherein the document, when executing the fifth program instructions, is designed for:
- producing (348, 348') the first shared secret (H);
- calculating (349, 349') the second parameter set (P2);
- producing (361, 361') the second private document key (PrK.ICC.DH2) and calculating (362, 362') the second public document key (PuK.ICC.DH2);
- calculating (380, 380') the second shared secret (H');
- calculating (372, 372') the document authentication value (MAC.ICC);
- sending the document-side authentication value (MAC.ICC) together with the second public key as part of a second RAPDU to the reader in order to perform the authentication of the document to the reader.

16. The document (ICC) according to either one of claims 14-15, wherein the non-volatile memory of the document includes the first parameter set (P1) or a selection of the first parameter set from a plurality of further first parameter sets, wherein the program instructions include fourth and/or fifth and/or sixth program instructions,
wherein the fourth program instructions are executed during the course of a boot-up procedure of the document or immediately after the boot-up procedure, wherein the document, when executing the fourth program instructions, is designed for:
- producing (434, 434') the first data value;
- calculating (436, 436') the ciphertext (E(s));
- producing (444, 444') the first private document key (PrK.ICC.DH1) and calculating (446, 446') the first public document key (PuK.ICC.DH1);
- storing the ciphertext (E(s)) and the first public document key in the document;
wherein the fifth program instructions are executed in response to the receipt of a first CAPDU containing the first public reader key, wherein the document, when executing the fifth program instructions, is designed for:
- in direct response to the receipt of the first CAPDU (450), reading the stored first public document key and the ciphertext (E(s)) and sending (447, 447') the read first public document key and the ciphertext (E(s)) as part of a first RAPDU (452) to the reader;
wherein the execution of the fifth program instructions also includes the execution of the following program instructions after or parallel to the sending of the first RAPDU:
- reading the stored first public document key (PuK.ICC.DH1) and the ciphertext (E(s));
- calculating (448, 448') the first shared secret (H);
- calculating (450, 450') the second parameter set (P2) by the document;
- producing (460, 460') the second private document key and calculating (462, 462') the second public document key;
wherein the sixth program instructions are executed in response to the receipt of a second CAPDU, wherein the second CAPDU is received in response to the sending of the first RAPDU by the document, wherein the second CAPDU (454) contains the second public reader key, wherein the document, when executing the sixth program instructions, is designed for:
- calculating (480, 480') the second shared secret (H');
- calculating (482, 482') a document authentication value (MAC.ICC);
- transmitting the document authentication value to the reader, wherein the second public document key (PuK.ICC.DH2) is sent from the document to the reader together with the document authentication value (MAC.ICC) as part of a second RAPDU (456).

17. A computer program product with computer-interpretable instructions for performing the program instructions according to any one of preceding claims 1-10.

## Revendications

1. Procédé d'authentification d'un document (ICC, 501) vis-à-vis d'un lecteur (IFD, 550) moyennant l'emploi d'un protocole de Diffie-Hellman, où, dans le lecteur, une première quantité de paramètres (P1) est stockée avec une ou plusieurs valeurs de paramètres dans une mémoire non volatile (504), où la première quantité de paramètres est stockée dans le lecteur lors de l'élaboration, de l'initialisation ou de la configuration de celui-ci, où la première quantité de paramètres (P1) contient des valeurs de paramètres qui sont nécessaires à l'exécution du protocole de Diffie-Hellman, où la communication entre le document et le lecteur a lieu après un protocole de carte à puce de réponse à une question, comprenant :
- la création (102, 234, 334 ; 434, 434') d'une première valeur de donnée (RND, ICC) par le document ;
- le calcul (104, 236, 336, 336' ; 436, 436') d'un texte crypté (E(s)) qui contient au moins la première valeur de donnée (RND, ICC), au moyen d'une clé privée (SK), par le document ;
- la transmission (106) du texte crypté (E(s)) du document vers le lecteur ;
- le décryptage (108, 238, 338 ; 438, 438') du texte crypté (E(s)) par le lecteur au moyen de la clé privée (SK) ;
- une première exécution (110) du protocole de Diffie-Hellman pour une concordance d'un premier secret commun (H) entre le document et le lecteur, où la première exécution du protocole de Diffie-Hellman repose sur la première quantité de paramètres (P1) ;
- une deuxième exécution (112) du protocole de Diffie-Hellman pour une concordance d'un deuxième secret commun (H') entre le document et le lecteur, où la deuxième exécution du protocole de Diffie-Hellman repose sur une deuxième quantité de paramètres (P2), où les autres valeurs de paramètres sont dérivées à partir de la première quantité de paramètres (P1) ainsi que du premier secret commun (H) et de la première valeur de donnée (RND, ICC) ;
- l'authentification (122) du document vis-à-vis du lecteur à l'aide du deuxième secret (H').

2. Procédé selon la revendication 1,
dans lequel la première exécution du protocole de Diffie-Hellman comprend :
- la création (244, 344, 344' ; 444, 444') d'une première clé de document privée (PrK.ICC.DH1) et le calcul d'une première clé de document publique (PuK.ICC.DH1), par le document, où la première quantité de paramètres (P1) participe au calcul de la première clé de document publique ;
- la création (240, 340, 340' ; 440, 440') d'une première clé de lecteur privée (PrK.IFD.DH1) et le calcul (242, 342, 342' ; 442, 442') d'une première clé de lecteur publique (PuK.IFD.DH1) par le lecteur, où la première quantité de paramètres (P1) participe au calcul de la première clé de lecteur publique ;
- l'envoi de la première clé de document publique (PuK.ICC.DH1) du document vers le lecteur, où la première clé de document publique et la première clé de lecteur privée participent au calcul au niveau du lecteur du premier secret (H) ;
- l'envoi de la première clé de lecteur publique (PuK.IFD.DH1) du lecteur vers le document, où la première clé de lecteur publique et la première clé de document privée participent au calcul au niveau du document du premier secret (H) ;
où la deuxième exécution du protocole de Diffie-Hellman comprend :
- le calcul au niveau du document (250, 349, 349' ; 449, 449') et du lecteur (245, 355, 355' ; 455, 455') de la deuxième quantité de paramètres (P2) à partir de la première quantité de paramètres (P1), où la première valeur de donnée (RND.ICC) et le premier secret commun (H) participent au calcul de la deuxième quantité de paramètres ;
- la création (260, 361, 361' ; 461, 461') d'une deuxième clé de document privée (PrK.ICC.DH2) et le calcul (262, 362, 362' ; 462, 462') d'une deuxième clé de document publique (PuK.ICC.DH2) par le document, où une ou plusieurs valeurs de paramètre de la deuxième quantité de paramètres (P2) participent au calcul de la deuxième clé de document publique ;
- la création (256, 357, 357' ; 457, 457') d'une deuxième clé de lecteur privée (PrK.IFD.DH2) et le calcul (258, 359, 359' ; 459, 459') d'une deuxième clé de lecteur publique (PuK.IFD.DH2) par le lecteur, où les une ou plusieurs valeurs de paramètre de la deuxième quantité de paramètres (P2) participent au calcul de la deuxième clé de lecteur publique ;
- l'envoi de la deuxième clé de document publique (PuK.ICC.DH2) du document vers le lecteur, où la deuxième clé de document publique et la deuxième clé de lecteur privée participent au calcul au niveau du lecteur du deuxième secret (H') ;
- l'envoi de la deuxième clé de document publique (PuK.ICC.DH2) du document vers le lecteur, où la deuxième clé de document publique et la deuxième clé de lecteur privée participent au calcul au niveau du document du deuxième secret (H'),
où l'authentification du document comprend de préférence :
- le calcul (114, 272, 372, 372' ; 472, 472') d'une valeur d'authentification de document (MAC.ICC) à partir du deuxième secret commun (H') par le document ;
- la transmission (116) de la valeur d'authentification de document (MAC.ICC) du document vers le lecteur ;
- la vérification (124) de la valeur d'authentification de document (MAC.ICC) par le lecteur.

3. Procédé selon l'une des revendications 1 ou 2, dans lequel la première quantité de paramètres (P1) :
- est stockée dans une mémoire non volatile du document ; ou
- est stockée en tant que première quantité de paramètres choisis conjointement avec une ou plusieurs autres premières quantités de paramètres dans la mémoire non volatile du document ; ou
- à partir d'un grand nombre de premières quantités de paramètres (P1, P1.1, P1.2, P1.3) qui ne sont pas stockées dans la mémoire non volatile, est choisi par la réception d'un signal de sélection, où, lors de la transmission du signal de sélection du lecteur vers le document, la première clé de lecteur publique (PuK.IFD.DH1) est également transmise du lecteur vers le document ; ou
- est transmise du lecteur vers le document.

4. Procédé selon l'une des revendications 1 à 3,
dans lequel la première valeur de donnée (RND.ICC) est transmise conjointement avec une ou plusieurs deuxièmes valeurs de données (DW2) vers le lecteur ;
où les deuxièmes valeurs de données sont transmises non cryptées ou sous forme de composantes du texte crypté (E(s)) ;
où la ou plusieurs deuxièmes valeurs de données font partie d'un groupe de valeurs de données, qui contient :
• une valeur de donnée destinée à renseigner une habilitation de l'utilisateur ;
• une valeur de donnée destinée à renseigner l'identité de l'utilisateur ;
• une valeur de donnée destinée à renseigner l'identité du document ;
• une valeur de donnée destiné à la désignation d'une application, d'un appareil ou d'une région géographique pour lequel(laquelle) une habilitation d'accès est demandée ;
• un document ID ;
• un identificateur de l'habilitation est exigé ;
• une indication d'un laps de temps pendant lequel l'habilitation dont la délivrance est exigée peut être valable ;
• un compteur d'essais d'authentification effectués jusque là vis-à-vis du lecteur ;
où le procédé contient en outre :
- la réception d'une ou de plusieurs deuxièmes valeurs de données par le lecteur,
- dans le cas où la ou les deuxièmes valeurs de données ont été transmises sous forme de composantes du texte crypté (E(s)), le décryptage également de la ou des deuxièmes valeurs de données par le lecteur ;
- la vérification (238, 338, 338' ; 438, 438'), par le lecteur, si une ou plusieurs des deuxièmes valeurs de données satisfont à des critères prédéfinis ;
- la signalisation (124) de l'habilitation de l'utilisateur uniquement dans le cas où le document s'est authentifié avec succès et en outre où chacune de la ou des deuxièmes valeurs de données satisfait aux critères prédéfinis.

5. Procédé selon l'une des revendications précédentes 2 à 4, dans lequel, en réponse à la réception d'une première RAPDU (352), qui a été envoyée du document vers le lecteur et contient la première clé de document publique, les étapes suivantes sont exécutées par le lecteur :
- un calcul au niveau du lecteur du premier secret commun (H) ;
- le décryptage du texte crypté (E(s)) ;
- le calcul au niveau du lecteur de la deuxième quantité de paramètres (P2) ;
- la création de la deuxième clé de lecteur privée (PrK.IED.DH2) et le calcul de la deuxième clé de lecteur publique (PuK.IFD.DH2) ;
- l'envoi de la deuxième clé de lecteur publique du lecteur vers le document en tant que composante d'une deuxième CAPDU (354).

6. Procédé selon l'une des revendications précédentes 2 à 5, dans lequel, en réponse à une réception d'une deuxième CAPDU (354), qui a été transmise du lecteur vers le document et qui contient la deuxième clé de lecteur publique (PuK.IFD.DH2), par laquelle les étapes suivantes sont exécutées par le document :
- le calcul au niveau du document (339, 339') du premier secret commun (H);
- le calcul au niveau du document (355, 355') de la deuxième quantité de paramètres ;
- la création au niveau du document (357, 357') de la clé de document privée (PrK.ICC.DH2) et le calcul au niveau du document (359, 359') de la deuxième clé de document publique (PuK.ICC.DH2) ;
- le calcul au niveau du document de la valeur d'authentification de document (MAC.ICC) ;
- l'envoi de la deuxième clé de document publique (PuK.ICC.DH2) du document vers le lecteur conjointement avec la valeur d'authentification de document (MAC.ICC) en tant que composante d'une deuxième RAPDU (356), où l'authentification du document vis-à-vis du lecteur a lieu à l'aide de la valeur d'authentification de document (MAC.ICC).

7. Procédé selon l'une des revendications 1 à 5, dans lequel un grand nombre de mots de passe (507) sont stockés dans la mémoire non volatile du document, où, pour chacun des mots de passe, une clé à employer pour le calcul du cryptage (SK.PinID) est calculée,
où le calcul et le stockage du texte crypté (E(s)) est exécuté pour chacun de ces mots de passe de sorte qu'après chaque processus d'amorce du document une première clé de document publique (PuK.ICC.DH1) est stocké dans le document et pour chaque mot de passe stocké sur le document, un texte crypté (E(s)) correspondant est stocké.

8. Procédé selon l'une des revendications 2 à 4, dans lequel la première quantité de paramètres (P1) est stocké dans la mémoire non volatile (504) du document, où le document, déjà avant ou parallèlement à la réception d'une première CAPDU qui contient la première clé de lecteur publique (PuK.IFD.DH1), effectue les étapes suivantes :
- la création (434, 434') de la première valeur de donnée (RND.ICC) ;
- le calcul (436, 436') du texte crypté (E(s)) ;
- la création (444, 444') de la première clé de document privée (PrK.ICCDH1)) ;
- le calcul (446, 446') de la première clé de document publique (PuK.ICC.DH1) ;
- un stockage du texte crypté (E(s)) et de la première clé de document publique (PuK.ICC.DH1) ;
où l'envoi de la deuxième clé de document publique du document vers le lecteur contient : en réponse immédiate à la réception de la première CAPDU (450), l'envoi d'une première RAPDU (452) du document vers le lecteur, où la première RAPDU contient le texte crypté (E(s)) stocké et la première clé de document publique (PuK.ICC.DH1) stockée.

9. Procédé selon l'une des revendications précédentes 4 à 8,
- dans lequel l'authentification du document contient une vérification (338, 338' ; 438, 438') de la ou de plusieurs deuxièmes valeurs de données ; et
- dans lequel la vérification a lieu avant la première exécution du protocole de Diffie-Hellman, où la première exécution du protocole de Diffie-Hellman et des étapes de calcul ultérieures n'ont lieu que si la vérification a pour résultat que chacune parmi la ou les deuxièmes valeurs de données (DW2) remplit un ou plusieurs critères prédéfinis, ou
- dans lequel la vérification de la ou des deuxièmes valeurs de données a lieu parallèlement à l'exécution du premier et/ou du deuxième protocole de Diffie-Hellman,
- dans lequel l'exécution du premier et du second protocole de Diffie-Hellman ou les étapes de calcul ultérieures sont automatiquement interrompues dans le cas où au moins une ou plusieurs des deuxièmes valeurs de données ne satisfont pas aux critères.

10. Procédé selon l'une des revendications précédentes 4 à 9, dans lequel, dans le cas où la deuxième valeur de donnée satisfait aux critères et le document s'est authentifié avec succès, dans lequel le procédé comprend en outre :
- l'envoi d'un ordre à un mécanisme de fermeture afin de transférer celui-ci d'un état de fermeture dans un état d'ouverture et permettre à l'utilisateur d'avoir un accès ou une emprise à un domaine protégé par le mécanisme de fermeture ; ou
- la possibilité d'accès à des données sécurisées ou à une mémoire de données sécurisée ; ou
- l'exécution automatique d'une routine de programme prédéterminée ou de mouvement prédéterminé d'un dispositif mécanique, où la routine de programme ou le mouvement prédéterminés peuvent être exécutés uniquement par des utilisateurs possédant une habilitation.

11. Lecteur (IFD, 550) comprenant :
- une interface (510) destinée à l'échange de données avec un document (ICC, 501) qui est associé à un utilisateur ;
- un processeur (552) ;
- une mémoire de données (556) non volatile avec des instructions de programme (560, 562, 564) exécutables par le processeur et avec un ou plusieurs premiers nombres de paramètres (P1, 505') pour l'exécution d'un protocole de Diffie-Hellman entre le document et le lecteur,
- où les premiers nombres de paramètres sont stockés dans le lecteur lors de l'établissement ou de la configuration de celui-ci, où l'exécution du protocole de Diffie-Hellman a lieu selon un protocole de carte à puce de réponse à une question, où le lecteur, lors de l'exécution des instructions de programme, est conçu pour :
• la réception d'un texte crypté (E(s)) qui contient au moins une première valeur de donnée (RND, ICC) dans une forme encryptée du document ;
• le décryptage (337, 337' ; 437, 437') du texte crypté (E(s)) ;
• une première exécution du protocole de Diffie-Hellman pour l'accord d'un premier secret commun (H) entre le document et le lecteur, où le protocole de Diffie-Hellman repose sur une (P1) des premiers nombres de paramètres ;
• une deuxième exécution du protocole de Diffie-Hellman pour l'accord d'un deuxième secret commun (H') entre le document et le lecteur, où la deuxième exécution du protocole de Diffie-Hellman repose sur une deuxième quantité de paramètres (P2), où les autres valeurs de paramètres sont dérivées de la première quantité de paramètres (P1) ainsi que du premier secret commun (H) et de la première valeur de donnée (RND.ICC) ;
• la réception d'une valeur d'authentification de document (MAC.ICC) du document, où le deuxième secret est impliqué dans la valeur d'authentification de document ;
• l'authentification du document par le lecteur à l'aide de la valeur d'authentification de document (MAC.ICC).

12. Lecteur (IFD) selon l'une des revendications 10 ou 11, où le lecteur est conçu pour la transmission de la première quantité de paramètres (P1) ou d'un signal de sélection vers le document, où le signal de sélection est approprié pour le choix de la première quantité de paramètres à partir d'un grand nombre de premières quantités de paramètres stockées dans le document, où, lors de la transmission de la première quantité de paramètres ou du signal de sélection, la première clé de lecteur publique (PuK.IFD.DH1) est également transmise au document.

13. Lecteur (IFD) selon l'une des revendications 10 à 12, dans lequel les instructions de programme contiennent des premières (560), et/ou des deuxièmes (562), et/ou des troisièmes (564) instructions de programme, où le lecteur, lors de l'exécution des premières instructions de programme, est conçu pour :
- la création de la première clé de lecteur privée (PrK.IFD.DH1) et le calcul de la première clé de lecteur publique (PuK.IFD.DH1) ; et
- l'envoi d'au moins une première clé de lecteur publique en tant que composante d'une première CAPDU vers le document ;
dans lequel les deuxièmes instructions de programme sont exécutées en réponse à la réception d'une première RAPDU, où la première RAPDU est reçue en réponse à l'envoi de la première CAPDU du lecteur, où la première RAPDU contient le texte crypté (E(s)) et la première clé de document publique (PuK.ICC.DH1) ;
où le lecteur, lors de l'exécution des deuxièmes instructions de programme, est conçu pour :
- le décryptage du texte crypté (E(s)) ;
- le calcul du premier secret commun ;
- le calcul de la deuxième quantité de paramètres (P2) ;
- la création de la deuxième clé de lecteur privée (PrK.IFD.DH2) et le calcul de la deuxième clé de lecteur publique (PuK.IFD.DH2) ;
- l'envoi de la deuxième clé de lecteur publique en tant que composante d'une deuxième CAPDU vers le document,
dans lequel les troisièmes instructions de programme sont exécutées en réponse à la réception d'une deuxième RAPDU (356), où la deuxième RAPDU est reçue en réponse à l'envoi de la deuxième CAPDU (354) à partir du lecteur, où la deuxième RAPDU contient la deuxième clé de document publique (PUK.ICC.DH2) et la valeur d'authentification de document (MAC.ICC),
où le lecteur, lors de l'exécution des troisièmes instructions de programme, est conçu pour l'authentification du document vis-à-vis du lecteur par :
- le calcul (364, 364') du deuxième secret commun (H') ;
- la vérification (367, 367') de la valeur d'authentification de document (MAC.ICC) moyennant l'emploi du deuxième secret commun (H').

14. Document (ICC, 501) qui est associé à un utilisateur, comprenant :
- une interface (510) destinée à l'échange de données avec un lecteur (IFD, 550) ;
- un processeur (552) ;
- une mémoire de données (504) non volatile avec des instructions de programme (512, 514, 517) exécutables par le processeur pour l'exécution d'un protocole de Diffie-Hellman entre le document et le lecteur, où l'exécution du protocole de Diffie-Hellman a lieu entre le document et le lecteur selon un protocole de carte à puce de réponse à une question,
où le document, lors de l'exécution des instructions de programme, est conçu pour :
- la création (334, 334' ; 434, 434') d'une première valeur de donnée (RND, ICC) ;
- le calcul (336, 336' ; 436, 436') d'un texte crypté (E(s)) à partir d'au moins la première valeur de donnée au moyen d'une clé privée (SK) ;
- la transmission du texte crypté (E(s)) vers le lecteur ;
- une première exécution du protocole de Diffie-Hellman pour une concordance d'un premier secret commun (H) entre le document et le lecteur, où la première exécution du protocole de Diffie-Hellman repose sur la première quantité de paramètres (P1), où l'exécution au niveau du document du premier protocole de Diffie-Hellman est initiée par le fait que le document reçoit une première clé de lecteur publique à partir du lecteur, où la première clé de lecteur publique est calculée par le lecteur au moyen d'une première quantité de paramètres (P1) stockée dans le lecteur déjà au début de l'exécution du premier protocole de Diffie-Hellman,
- une deuxième exécution du protocole de Diffie-Hellman pour l'accord d'un deuxième secret commun (H') entre le document et le lecteur, où la deuxième exécution du protocole de Diffie-Hellman repose sur une deuxième quantité de paramètres (P2), dont les valeurs de paramètres sont dérivées à partir de la première quantité de paramètres (P1) ainsi que du premier secret commun (H) et de la première valeur de donnée (RND, ICC), où les première et deuxième exécutions du protocole de Diffie-Hellman servent à l'authentification du document vis-à-vis du lecteur ;
- le calcul (372, 372' ; 472, 472') d'une valeur d'authentification de document (MAC.ICC) à partir du deuxième secret commun (H') par le document ;
- la transmission de la valeur d'authentification de document (MAC.ICC) du document vers le lecteur.

15. Document (ICC) selon la revendication 14, dans lequel les instructions de programme contiennent des quatrièmes et/ou des cinquièmes instructions de programme,
dans lequel les quatrièmes instructions de programmes sont exécutées en réponse à la réception d'une première CAPDU (350), laquelle contient la première clé de lecteur publique, où le document, lors de l'exécution des quatrièmes instructions de programme, est conçu pour :
- la création (334, 334') d'une première valeur de donnée (RND.ICC) ;
- le calcul (336, 336') du texte crypté (E(s)) ;
- la création (344, 344') de la première clé de document publique (PuK.ICC.DH1) et le calcul (346, 346') de la première clé de document privée (PrK.ICC.DH1) ;
- l'envoi de la première clé de document publique conjointement avec le texte crypté (E(s)) au lecteur sous forme de composantes d'une première RAPDU dans le cadre de la première exécution du protocole de Diffie-Hellman ;
dans lequel les cinquièmes instructions de programme sont exécutées en réponse à la réception d'une deuxième CAPDU, où la deuxième CAPDU est reçue en réponse à l'envoi de la première CAPDU par le document, où la deuxième CAPDU contient une deuxième clé de lecteur publique (PuK.IFD.DH2), où le document, lors de l'exécution des cinquièmes instructions de programme, est conçu pour :
- le calcul (348, 348') du premier secret commun (H) ;
- le calcul (349, 349') de la deuxième quantité de paramètres (P2) ;
- la création (361, 361') de la deuxième clé de document privée (PrK.ICC.DH2) et le calcul (362, 362') de la deuxième clé de document publique (PuK.ICC.DH2) ;
- le calcul (380, 380') du deuxième secret commun (H') ;
- le calcul (372, 372') de la valeur d'authentification de document (MAC.ICC) ;
- l'envoi au niveau du document de la valeur d'authentification (MAC.ICC) conjointement avec la deuxième clé publique en tant que composantes d'une deuxième RAPDU au lecteur pour l'exécution de l'authentification du document vis-à-vis du lecteur.

16. Document (ICC) selon l'une des revendications 14 ou 15, dans lequel la mémoire non volatile du document contient la première quantité de paramètres (P1) ou une sélection de la première quantité de paramètres à partir d'un grand nombre d'autres premières quantités de paramètres, où les instructions de programme contiennent des quatrièmes, et/ou des cinquièmes, et/ou des sixièmes instructions de programme,
dans lequel les quatrièmes instructions de programme sont exécutées au cours d'un processus d'amorce du document ou immédiatement à la suite du processus d'amorce, où le document, lors de l'exécution des quatrièmes instructions de programmes, est conçu pour :
- la création (434, 434') de la première valeur de donnée ;
- le calcul (436, 436') du texte crypté (E(s)) ;
- la création (444, 444') de la première clé de document privée (PrK.ICC.DH1) et le calcul (446, 446') de la première clé de document publique (PuK.ICC.DH1) ;
- un stockage du texte crypté (E(s)) et de la première clé de document publique dans le document ;
dans lequel les cinquièmes instructions de programme sont exécutées en réponse à la réception d'une première CAPDU contenant la première clé de lecteur publique, où le document, lors de l'exécution des cinquièmes instructions de programme, est conçu pour :
- immédiatement en réponse à la réception de la première CAPDU (450), la lecture de la première clé de document publique stockée et du texte crypté (E(s)) et l'envoi (447, 447') de la première clé de document publique lue et du texte crypté (E(s)) en tant que composantes d'une première RAPDU (425) vers le lecteur ;
dans lequel l'exécution des cinquièmes instructions de programme contient en outre l'exécution des instructions de programmes suivantes après ou parallèlement à l'envoi de la première RAPDU :
- la lecture de la première clé de document publique (PuK.ICC.DH1) et du texte crypté (E(s)) ;
- le calcul (448, 448') du premier secret commun (H) ;
- le calcul au niveau du document (450, 450') de la deuxième quantité de paramètres (P2) ;
- la création (460, 460') de la deuxième clé de document privée et le calcul (462, 462') de la deuxième clé de document publique ;
dans lequel les sixièmes instructions de programme sont exécutées en réponse à la réception d'une deuxième CAPDU, où la deuxième CAPDU est reçue en réponse à l'envoi de la première CAPDU par le document, où la deuxième CAPDU (454) contient la deuxième clé de lecteur publique, où le document, lors de l'exécution des sixièmes instructions de programme, est conçu pour :
- le calcul (480, 480') du deuxième secret commun (H') ;
- le calcul (482, 482') d'une valeur d'authentification de document (MAC.ICC) ;
- la transmission de la valeur d'authentification de document au lecteur, où la deuxième clé de document publique (PuK.ICC.DH2) est envoyée du document vers le lecteur conjointement avec la valeur d'authentification de document (MAC.ICC) en tant que composantes d'une deuxième RAPDU (456).

17. Produit de programme d'ordinateur avec des instructions pouvant être interprétées par ordinateur pour l'exécution des instructions de programmes selon l'une des revendications précédentes 1 à 10.
